# EUROPEAN PATENT APPLICATION

(11) **EP 3 381 664 A1**
(43) Date of publication of application: **03.10.2018**
(21) Application number: 18164379.2
(22) Date of filing: 27.03.2018
(51) Int. Cl.: B29C 65/52, B29C 65/78

(54) **BONDING DEVICE**

(30) Priority: 31.03.2017 JP 2017073045
(71) Applicant: BROTHER KOGYO KABUSHIKI KAISHA, Nagoya-shi, Aichi-ken 467-8561 (JP)
(72) Inventor: SHIBATA, Itaru, Aichi-ken, 467-8562 (JP); IWAKOSHI, Hiroyasu, Aichi-ken, 467-8562 (JP); UMEDA, Kazutoshi, Aichi-ken, 467-8562 (JP)
(74) Representative: J A Kemp

(57) **Abstract**

The present invention relates to a bonding device which can suppress positional displacement of an end portion of a lower sheet and an end portion of an upper sheet with respect to a nozzle, and which can stably convey the lower sheet and the upper sheet. The bonding device 1 includes a lower clamp roller 501, an upper clamp roller 601, a support member 315, a lower detection portion 535, and an upper detection portion 635. Each of the lower clamp roller 501 and the upper clamp roller 601 can rotate with an axial direction thereof being the front-rear direction. A lower specified end portion 8A, which is a right end portion of the lower sheet 8, is clamped between the lower clamp roller 501 and the support member 315. An upper specified end portion 6A, which is a left end portion of the upper sheet 6, is clamped between the upper clamp roller 601 and the support member 315. The lower detection portion 535 detects whether the lower specified end portion 8A is located at a lower detection position P, which is a predetermined position. The upper detection portion 635 detects whether the upper specified end portion 6A is located at an upper detection position Q, which is a predetermined position. The bonding device 1 switches a rotating direction of the lower clamp roller501 and the upper clamp roller 601 in accordance with detection results of the lower detection portion 535 and the upper detection portion 635.

## Description

### BACKGROUND

The present invention relates to a bonding device.

A bonding device is known that bonds two sheets together via an adhesive. A bonding device disclosed in Japanese Laid-Open Patent Publication No. 2011-122262 is provided with a nozzle, an upper transport roller, a belt and a guide member for a two-edge portion. The nozzle discharges the adhesive onto a lower sheet. The upper transport roller transports the lower sheet, to which the adhesive has been applied, and an upper sheet while pressing the lower sheet and the upper sheet between itself and the belt. The guide member for the two-edge portion is provided with a lower sheet guide portion and an upper sheet guide portion. An operator positions the right end portion of the lower sheet by inserting it into the lower sheet guide portion. An operator positions the left end portion of the upper sheet by inserting it into the upper sheet guide portion.

### SUMMARY

With the above-described bonding device, the operator needs to hold each of the lower sheet and the upper sheet that are transported, so that each of the right end portion of the lower sheet and the left end portion of the upper sheet is not displaced with respect to the nozzle in the left-right direction. However, if the force with which the operator holds the lower sheet and the upper sheet is excessively strong, there is a possibility that the upper sheet and the lower sheet may be displaced in the left-right direction by the operator who pulls the lower sheet and the upper sheet that are transported. Thus, there is a possibility that wrinkles may occur. If the force with which the operator holds the lower sheet and the upper sheet is excessively weak, there is a possibility that the right end portion of the lower sheet may be displaced from the lower sheet guide portion and the left end portion of the upper sheet may be displaced from the upper sheet guide portion. Thus, there is a possibility that an overlapping amount of the lower sheet and the upper sheet may vary. As a result, with the above-described bonding device, it may become difficult to maintain a positional relationship of each of the right end portion of the lower sheet and the left end portion of the upper sheet with respect to the nozzle, and it may become difficult to stably transport the lower sheet and the upper sheet.

It is an object of the present invention to provide a bonding device which can suppress positional displacement of an end portion of a lower sheet and an end portion of an upper sheet with respect to a nozzle, and which can stably convey the lower sheet and the upper sheet.

A bonding device of the present invention includes a lower support portion, a nozzle, a supply mechanism, a discharge-conveyance control portion, a lower clamp roller, a support member, an upper clamp roller, a lower motor, an upper motor, a lower detection portion, an upper detection portion, a motor control portion. The lower support portion is configured to support a lower sheet from below. The nozzle is provided above the lower sheet and includes an upper support portion and a discharge port. The upper support portion is configured to support, from below, an upper sheet that is to be overlapped on the lower sheet from above. The discharge port is configured to discharge an adhesive, below the upper support portion, toward the lower sheet. The supply mechanism is configured to supply the adhesive to the nozzle. The conveyance mechanism is configured to convey the lower sheet and the upper sheet on a downstream side in a conveyance direction with respect to the nozzle while clamping the lower sheet and the upper sheet in an up-down direction. The conveyance direction is a direction in which the lower sheet and the upper sheet are conveyed. The conveyance mechanism is configured to convey the lower sheet to which the adhesive has been applied. The discharge-conveyance control portion is configured to discharge the adhesive from the discharge port and configured to pressure-bond and convey a lower specified end portion and an upper specified end portion while applying the adhesive to the lower specified end portion by performing drive control of the conveyance mechanism and the supply mechanism. The lower specified end portion is an end portion of the lower sheet on one side in a specified direction. The upper specified end portion is an end portion of the upper sheet on another side opposite to the one side. The specified direction is orthogonal to the conveyance direction and the up-down direction. The lower clamp roller protrudes upward from the lower support portion on an upstream side with respect to the nozzle in the conveyance direction. The lower clamp roller is configured to come into contact with the lower sheet. The lower clamp roller is configured to rotate with an axial direction of the lower clamp roller being the conveyance direction. The support member extends in the specified direction and the conveyance direction. The support member is configured to clamp the lower sheet between the support member and the lower clamp roller and configured to support the upper sheet from below. The upper clamp roller is configured to rotate with an axial direction of the upper clamp roller being the conveyance direction, and configured to clamp, from above, the upper specified end portion between the upper clamp roller and the support member. The lower motor is configured to drive the lower clamp roller. The upper motor is configured to drive the upper clamp roller. The lower detection portion is configured to detect whether the lower specified end portion is located at a lower detection position. The lower detection position is a predetermined position between the discharge port and the lower clamp roller in the conveyance direction. The upper detection portion is configured to detect whether the upper specified end portion is located at an upper detection position. The upper detection position is a predetermined position between the discharge port and the upper clamp roller in the conveyance direction. The motor control portion is configured to control the lower motor and the upper motor when the discharge-conveyance control portion controls the conveyance mechanism and the supply mechanism. The motor control portion includes, a first motor control portion, a second motor control portion, a third motor control portion, and a fourth motor control portion. A first motor control portion is configured to move the lower sheet to the other side by rotationally driving the lower clamp roller in a first output direction when the lower detection portion detects that the lower specified end portion is located at the lower detection position. A second motor control portion is configured to move the lower sheet to the one side by rotationally driving the lower clamp roller in a second output direction opposite to the first output direction when the lower detection portion detects that the lower specified end portion is not located at the lower detection position. A third motor control portion is configured to move the upper sheet to the one side by rotationally driving the upper clamp roller in a third output direction when the upper detection portion detects that the upper specified end portion is located at the upper detection position. A fourth motor control portion is configured to move the upper sheet to the other side by rotationally driving the upper clamp roller in a fourth output direction opposite to the third output direction when the upper detection portion detects that the upper specified end portion is not located at the upper detection position.

With the above-described configuration, when the conveyance mechanism conveys the lower sheet and the upper sheet, the lower clamp roller rotates such that the lower specified end portion passes the vicinity of the lower detection position, and the upper clamp roller rotates such that the upper specified end portion passes the vicinity of the upper detection position. The positional displacement of the lower specified end portion and the upper specified end portion with respect to the nozzle does not easily occur in the specified direction. Therefore, the bonding device can suppress the positional displacement of an end portion of the lower sheet and an end portion of the upper sheet with respect to the nozzle, and can stably convey the lower sheet and the upper sheet.

The lower clamp roller of the bonding device of the present invention may be located further to the other side than the lower detection position. The upper clamp roller may be located further to the one side than the upper detection position. There is a possibility that the lower specified end portion may have a shape that extends to the upstream side in the conveyance direction and to the other side. Even in this case, before the lower specified end portion deviates to the other side from a position between the lower clamp roller and the support member, the second motor control portion drives and rotates the lower clamp roller in the second output direction. Thus, the lower specified end portion is unlikely to deviate from the position between the lower clamp roller and the support member. There is a possibility that the upper specified end portion may have a shape that extends to the upstream side in the conveyance direction and to the one side. Even in this case, before the upper specified end portion deviates to the one side from a position between the upper clamp roller and the support member, the fourth motor control portion drives and rotates the upper clamp roller in the fourth output direction. Thus, the upper specified end portion is unlikely to deviate from the position between the upper clamp roller and the support member. Thus, the bonding device can further suppress the positional displacement of the lower specified end portion and the upper specified end portion with respect to the nozzle.

The support member of the bonding device of the present invention may include an upper support surface configured to support the upper sheet. The upper support surface may be located at a same height as an upper end of an upstream-side end portion, in the conveyance direction, of the upper support portion of the nozzle. The upper sheet located between the upper support surface and the upper support portion is unlikely to be curved in the up-down direction. Therefore, wrinkles are unlikely to occur in the upper sheet, and thus the bonding device can stably convey the upper sheet.

The support member of the bonding device of the present invention may extend in parallel with the lower support portion. The bonding device can reduce a space between the support member and the lower support portion in the up-down direction, and it is easy for the operator to visually check the nozzle from the upstream side in the conveyance direction. Thus, when the operator disposes the upper sheet on the bonding device, the operator can easily recognize the positional relationship of the upper sheet with respect to the nozzle.

An upstream-side end portion, in the conveyance direction, of at least one of the lower clamp roller of the bonding device of the present invention and the upper clamp roller of the bonding device of the present invention may be a roller end portion. The the roller end portion is formed in a inclined shape that extends toward a center side in a radial direction as the roller end portion extends toward the upstream side in the conveyance direction. The roller end portion is unlikely to catch on the lower sheet or the upper sheet. Thus, the bonding device can more stably convey the lower sheet and the upper sheet.

The lower detection portion of the bonding device of the present invention may include a lower light emitting portion, and a lower light receiving portion. A lower light emitting portion is configured to emit light upward. The lower light receiving portion is configured to receive the light emitted by the lower light emitting portion. The lower support portion may include a nozzle facing member that faces the nozzle from below. The nozzle facing member may include a through hole that is open in the up-down direction. The lower light emitting portion may be positioned below the through hole. The lower detection position may be a position above the lower detection portion. The bonding device can make the lower detection position closer to the nozzle. Therefore, since the bonding device can shorten the distance in the conveyance direction between the lower detection position and the nozzle, the bonding device can further suppress the positional displacement between the lower specified end portion and the nozzle.

The upper detection portion of the bonding device of the present invention may include an upper light emitting portion, and an upper light receiving portion. The upper light emitting portion is configured to emit light downward. The upper light receiving portion is configured to receive the light emitted by the upper light emitting portion. The support member may include a lower reflection portion, and an upper reflection portion. The lower reflection portion is configured to reflect the light toward the lower light receiving portion. The light is emitted by the lower light emitting portion. The upper reflection portion is configured to reflect the light toward the upper light receiving portion. The light is emitted by the upper light emitting portion. The lower detection position may be a position between the lower light emitting portion and the lower reflection portion. The upper detection position may be a position between the upper light emitting portion and the upper reflection portion. The support member can have a function to reflect the light that has not been blocked by the lower specified end portion to the lower light receiving portion, as well as a function to reflect the light that has not been blocked by the upper specified end portion to the upper light receiving portion. Thus, the bonding device can be simplified.

The bonding device of the present invention may further include a nozzle mounting portion, and an upper detection portion support mechanism. A plurality of the nozzles are selectively mounted on the nozzle mounting portion. Discharge widths of the plurality of the nozzles are different from each other. Each of the discharge widths is a formation range of the discharge port in the specified direction. The upper detection portion support mechanism is configured to support the upper detection portion such that the upper detection portion is able to move in the specified direction. The upper reflection portion is configured to move in the specified direction in accordance with a position of the upper detection portion in the specified direction. The bonding device can change the upper detection position of the upper specified end portion in the specified direction, in accordance with the discharge width. Therefore, the bonding device can diversify a method of bonding the lower sheet and the upper sheet.

The upper detection portion support mechanism of the bonding device of the present invention may include an upper fixing member, a holding member, a long hole, a fastening hole, and a fastening member. The upper fixing member is fixed at a predetermined position. The holding member is configured to hold the upper detection portion. The long hole is provided in the holding member and is long in the specified direction. The fastening hole is provided in the upper fixing member and faces the long hole. The fastening member is inserted through the long hole and is fastened into the fastening hole. By loosening the fastening member, the operator can change the position of the upper detection portion in the specified direction. Thus, the bonding device can make it easier to change the position of the upper detection portion in the specified direction.

The bonding device of the present invention may further include a nozzle support member, a nozzle motor, a movable body, a base, a drive portion, a nozzle movement control portion, and a movable body movement control portion. The nozzle support member is configured to support the nozzle such that the nozzle is able to move between a facing position and a separated position. The facing position is a position in which the discharge port faces the nozzle facing member from above. The separated position is a position in which the discharge port is located on the upstream side with respect to the support member in the conveyance direction. The nozzle motor is configured to move the nozzle between the facing position and the separated position. The movable body is configured to support the support member. The base is configured to support the movable body such that the movable body is able to move between an operating position and a retracted position. The operating position is a position in which the support member is located at a position on the upstream side in the conveyance direction with respect to the nozzle in the facing position. The retracted position is a position in which the support member is located at a position displaced to the one side in the specified direction with respect to the operating position. The drive portion is provided on the base and configured to move the movable body. The nozzle movement control portion is configured to move the nozzle from the separated position to the facing position by controlling the nozzle motor, before the discharge-conveyance control portion controls the conveyance mechanism and the supply mechanism. The movable body movement control portion is configured to move the movable body from the retracted position to the operating position by controlling the drive portion, after the nozzle movement control portion has moved the nozzle and before the discharge-conveyance control portion controls the conveyance mechanism and the supply mechanism. Before the nozzle is displaced from the separated position to the facing position, the movable body is in the retracted position. Thus, when the nozzle is in the separated position, the operator can easily dispose the lower sheet on the lower support portion.

The bonding device of the present invention may further include a positioning member, and a change mechanism. The positioning member is provided on the base. The positioning member is configured to position the movable body in the operating position by restricting the movable body from moving further to an opposite side with respect to the retracted position than the operating position. The change mechanism is configured to change the position at which the positioning member positions the movable body. The change mechanism is configured to change the position in a movement direction of the movable body. The upper detection position is displaced in the specified direction by the change mechanism changing the operating position. Thus, the bonding device can adjust a length in the specified direction of the upper specified end portion that is overlapped with the lower specified end portion in the up-down direction.

The change mechanism of the bonding device of the present invention may include an insertion hole, a screw hole, a screw hole, and a screw member. The insertion hole is provided in the positioning member and is long in the specified direction. The screw hole is provided on the base and that faces the insertion hole. The screw member is inserted through the insertion hole and is fastened into the screw hole. By loosening the screw member, the operator can change the fixing position of the positioning member with respect to the base in the specified direction. Thus, the bonding device can make it easier to change the operating position of the movable body.

The bonding device of the present invention may further include a lower motor support member, a lower support body, a lower arm, a lower drive coupling portion, and a lower elastic member. The lower motor support member is configured to support the lower motor below the lower support portion. The lower support body is configured to rotatably support the lower motor support member around a lower axis line that extends in the conveyance direction. The lower arm extends upward and to the one side from the lower motor support member, and includes a leading end portion configured to rotatably support the lower clamp roller. The lower drive coupling portion is configured to couple the lower motor and the lower clamp roller. The lower elastic member is configured to couple to the lower motor support member and the lower support body, and to urge the lower motor support member in a rotating direction in which the lower clamp roller protrudes upward from the lower support portion. Since the lower elastic member urges the lower motor support member, the lower clamp roller can stably clamp the lower sheet between lower clamp roller and the support member.

The bonding device of the present invention may further include a lower adjustment mechanism configured to adjust an elastic deformation amount of the lower elastic member. The operator can adjust a force with which the lower clamp roller clamps the lower sheet between the lower clamp roller and the support member.

The lower adjustment mechanism of the bonding device of the present invention may include a lower coupling member, a lower screw hole, a bolt, and a nut. The lower coupling member is configured to couple the lower support body and the lower elastic member. The lower screw hole is provided in the lower coupling member. The bolt is screwed into the lower screw hole. The bolt is inserted is inserted into the nut. The nut is fixed to the lower coupling member. The operator can change the elastic deformation amount of the lower elastic member by loosening the nut and adjusting the position of the bolt in the up-down direction. Thus, the bonding device can simplify the adjustment of the elastic deformation amount of the lower elastic member.

The lower motor support member of the bonding device of the present invention may be configured to rotate between a lower contact position and a lower separated position. The lower contact position is a position in which the lower clamp roller is in contact with the support member. The lower separated position is a position in which the lower clamp roller is separated downward from the support member. When the lower motor support member is in the lower separated position, the operator can easily dispose the lower sheet between the lower clamp roller and the support member.

The bonding device of the present invention may further include a lower move portion, a first lower control portion, and a second lower control portion. The lower move portion includes a lower rod. The lower rod is configured to move along an axial direction of the lower rod. The lower move portion is configured to move the lower rod between a lower urging position and a lower retracted position. The lower urging position is a position in which the lower rod urges the lower motor support member in a rotating direction from the lower contact position toward the lower separated position. The lower retracted position is a position in which the lower rod is separated from the lower motor support member. The first lower control portion is configured to move the lower rod from the lower retracted position to the lower urging position by controlling the lower move portion, before the discharge-conveyance control portion controls the conveyance mechanism and the supply mechanism. The second lower control portion is configured to move the lower rod from the lower urging position to the lower retracted position by controlling the lower move portion after the first lower control portion has moved the lower rod and before the discharge-conveyance control portion controls the conveyance mechanism and the supply mechanism. The lower motor support member rotates to the lower separated position automatically. Thus, the operator can easily dispose the lower sheet.

The bonding device of the present invention may further include an upper motor support member, an upper support body, an upper arm, an upper drive coupling portion, and an upper elastic member. The upper motor support member is configured to support the upper motor above the lower support portion. The upper support body is configured to rotatably support the upper motor support member around an upper axis line that extends in the conveyance direction. The upper arm extends downward and to the other side from the upper motor support member, and includes a leading end portion configured to rotatably support the upper clamp roller. The upper drive coupling portion is configured to couple the upper motor and the upper clamp roller. The upper elastic member is configured to couple the upper motor support member and the upper support body, and to urge the upper motor support member in a rotating direction in which the upper clamp roller separates upward from the support member. The upper elastic member urge the upper motor support member in a rotating direction in which the upper clamp roller separates upward from the support member. The bonding device can suppress a force with which the upper clamp roller clamps the upper sheet between the upper clamp roller and the support member from becoming excessive. Thus, the bonding device can stably convey the upper sheet.

The bonding device of the present invention may further include an upper adjustment mechanism configured to adjust an elastic deformation amount of the upper elastic member. The bonding device can adjust the force with which the upper clamp roller clamps the upper sheet between the upper clamp roller and the support member.

The upper adjustment mechanism of the bonding device of the present invention may include an upper coupling member, a plurality of engagement holes, and an engagement portion. The upper coupling member is configured to be coupled to the upper support body. The plurality of engagement holes are provided in the upper coupling member and are aligned along a direction in which the upper elastic member is elastically deformed. The engagement portion is configured to be coupled to the upper elastic member and to be engaged with one of the plurality of engagement holes. The operator can change the elastic deformation amount of the upper elastic member by changing the engagement hole to be engaged with the engagement portion. Therefore, the operator can easily change the force with which the upper clamp roller clamps the upper sheet between the upper clamp roller and the support member.

The upper motor support member of the bonding device of the present invention may be configured to rotate between an upper contact position and an upper separated position. The upper contact position is a position in which the upper clamp roller is in contact with the support member. The upper separated position is a position in which the upper clamp roller is separated upward from the support member. When the upper motor support member is in the upper separated position, the bonding device can allow the operator to easily dispose the upper sheet between the upper clamp roller and the support member.

The bonding device of the present invention may further include an upper move portion, a first upper move control portion, and a second upper move control portion. The upper move portion includes an upper rod configured to move along an axial direction of the upper rod. The upper move portion is configured to move the upper rod between an upper urging position and an upper retracted position. The upper urging position is a position in which the upper rod urges the upper motor support member in a rotating direction from the upper contact position toward the upper separated position. The upper retracted position is a position in which the upper rod is separated from the upper motor support member. The first upper move control portion is configured to move the upper rod from the upper retracted position to the upper urging position by controlling the upper move portion, before the discharge-conveyance control portion controls the conveyance mechanism and the supply mechanism. The second upper move control portion is configured to move the upper rod from the upper urging position to the upper retracted position by controlling the upper move portion, after the first upper control portion has moved the upper rod and before the discharge-conveyance control portion controls the conveyance mechanism and the supply mechanism. When the upper motor support member is in the upper separated position, the operator can dispose the upper sheet between the support member and the upper clamp roller. Thus, the operator can easily dispose the upper sheet.

The conveyance mechanism of the bonding device of the present invention may include a lower conveyance roller, an upper conveyance roller, a lower conveyance motor, and an upper conveyance motor. The lower conveyance roller is configured to come into contact with the lower sheet from below, and configured to rotate on the downstream side in the conveyance direction with respect to the nozzle. The lower conveyance roller is configured to rotate with an axial direction of the lower conveyance roller being the specified direction. The upper conveyance roller is configured to rotate with an axial direction of the upper conveyance roller is the specified direction, and configured to clamp, from above, the lower sheet and the upper sheet between the upper conveyance roller and the lower conveyance roller. The lower conveyance motor is configured to drive the lower conveyance roller. The upper conveyance motor is configured to drive the upper conveyance roller. The lower support portion includes a hole portion that is open in the up-down direction below the discharge port. The conveyance mechanism includes an under-nozzle roller configured to come into contact with the lower sheet from below and configured to rotate with an axial direction of the under-nozzle roller being the specified direction. The under-nozzle roller is configured to rotate on the upstream side in the conveyance direction with respect to the lower conveyance roller. The under-nozzle roller is coupled to the lower conveyance motor. The under-nozzle roller protrudes upward from the hole portion and faces the discharge port. An outer diameter of the under-nozzle roller is the same as the outer diameter of the lower conveyance roller. An outer peripheral surface of the lower conveyance roller and the outer peripheral surface of the under-nozzle roller rotate in the same direction and at the same speed around their respective centers of rotation. The speed at which the upper conveyance roller and the lower conveyance roller convey the lower sheet is the same as the speed at which the under-nozzle roller conveys the lower sheet. Thus, the lower sheet does not easily become stretched between the lower conveyance roller and the under-nozzle roller. Thus, unevenness does not easily occur in the upper sheet and the lower sheet that have been bonded together. Thus, the bonding device can secure stability in the quality of the lower sheet and the upper sheet that have been bonded together.

### BRIEF DESCRIPTION OF THE DRAWINGS

Exemplary embodiments of the present disclosure will be described below in detail with reference to the accompanying drawings in which:
FIG. 1 is a perspective view of a bonding device 1;
FIG. 2 is a perspective view of an internal configuration of the bonding device 1;
FIG. 3 is another perspective view of the internal configuration of the bonding device 1;
FIG. 4 is a left side view of the bonding device 1;
FIG. 5 is a perspective view when nozzles 11 and 13 are viewed from below;
FIG. 6 is a perspective view of a nozzle facing member 230;
FIG. 7 is a perspective view of a lower conveyance mechanism 260 and a position adjustment mechanism 240;
FIG. 8 is a perspective view of an upper support mechanism 300;
FIG. 9 is a perspective view of the upper support mechanism 300 when a support base 305 is omitted;
FIG. 10 is an enlarged perspective view of a lower clamp roller 501, a support member 315 and an upper clamp roller 601;
FIG. 11 is a left side view of the lower clamp roller 501 and an under-nozzle roller 275;
FIG. 12 is a front view of a lower detection mechanism 530 and an upper detection portion support mechanism 660;
FIG. 13 is a perspective view of a lower air cylinder 525 when a lower rod 526 is in a lower retracted position;
FIG. 14 is a perspective view of an upper clamp mechanism 600;
FIG. 15 is an electrical block diagram of the bonding device 1;
FIG. 16 is a flowchart of main processing;
FIG. 17 is a perspective view of the upper support mechanism 300 when a movable body 304 is in a retracted position;
FIG. 18 is a perspective view of the upper support mechanism 300 when the movable body 304 is in an operating position;
FIG. 19 is a perspective view of the lower air cylinder 525 when the lower rod 526 is in a lower urging position;
FIG. 20 is a perspective view of an upper air cylinder 625 when an upper rod 626 is in an upper urging position;
FIG. 21 is a flowchart of bonding processing;
FIG. 22 is a right side view of an upper sheet 6, and a lower sheet 8 after an adhesive Z has been applied;
FIG. 23 is a front view of a lower specified end portion 8A located at a lower detection position P, and an upper specified end portion 6A located at an upper detection position Q; and
FIG. 24 is a front view of the lower specified end portion 8A that is not located at the lower detection position P, and the upper specified end portion 6A that is not located at the upper detection position Q.

### DETAILED DESCRIPTION

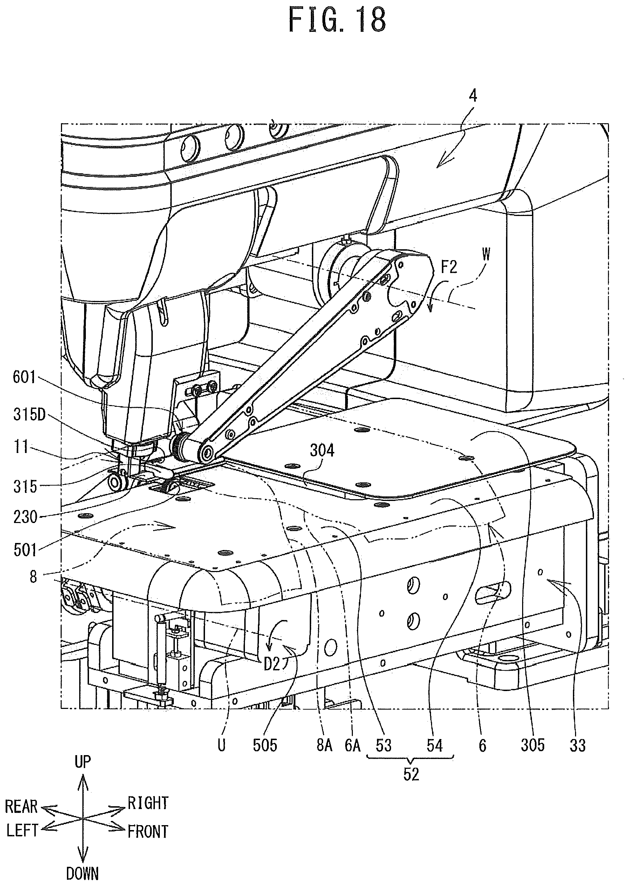

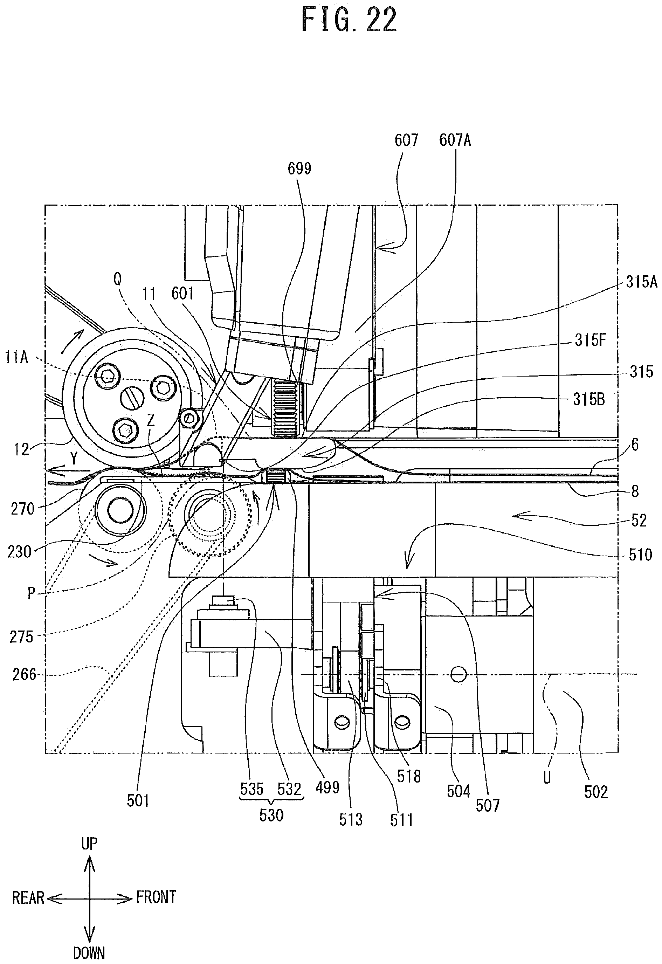

An embodiment of the present invention will be explained. In the following explanation, left and right directions, front and rear directions, and up and down directions as indicated by arrows in the drawings are used. A bonding device 1 bonds two sheets using an adhesive Z (refer to FIG. 22). The two sheets are a lower sheet 8 and an upper sheet 6 (refer to FIG. 18). The upper sheet 6 is overlapped on the lower sheet 8 from above. The lower sheet 8 and the upper sheet 6 are flexible cloths, for example. The bonding device 1 of the present embodiment bonds a lower specified end portion 8A, which is the right end portion of the lower sheet 8, and an upper specified end portion 6A, which is the left end portion of the upper sheet 6, via the adhesive Z.

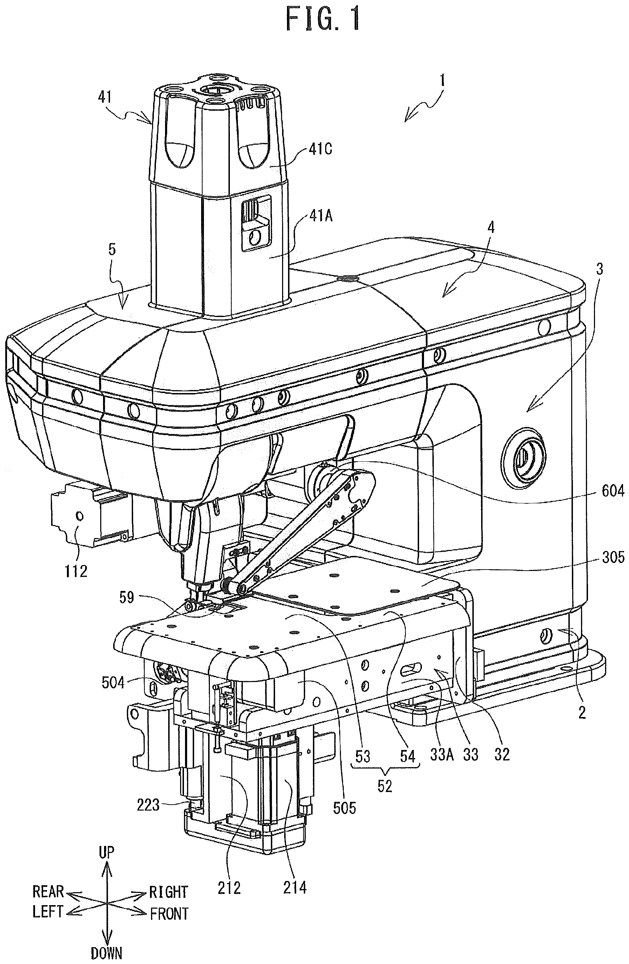

A mechanical configuration of the bonding device 1 will be explained with reference to FIG. 1 to FIG. 14. As shown in FIG. 1 to FIG. 3, the bonding device 1 is provided with a seat portion 2, a pillar 3, an arm portion 4 and a head portion 5. The seat portion 2 has a cuboid shape and is fixed to a work bench. The pillar 3 has a columnar shape and extends upward from the upper surface of the seat portion 2. The arm portion 4 extends to the left from the upper end portion of the pillar 3. The head portion 5 protrudes to the left from the left end portion of the arm portion 4.

The seat portion 2 supports a fixed portion 32. The fixed portion 32 has a rectangular plate shape and is fixed to the left surface of the seat portion 2. The fixed portion 32 supports a base 33. The base 33 has a U shape in a left side view and extends to the left from the fixed portion 32. The base 33 is provided with a front wall 33A. A support portion 52 is fixed to the upper end of the base 33. The support portion 52 extends in the left-right direction and the front-rear direction. The support portion 52 has a substantially L shape in a plan view. The support portion 52 is provided with a left portion 53 and a right portion 54. The left portion 53 has a substantially rectangular shape in a plan view. The left portion 53 supports the lower sheet 8 from below. The rear end of the left portion 53 is provided with an opening hole 59 that is open in the up-down direction. The right portion 54 extends to the right from a right end front portion of the left portion 53. The length of the right portion 54 in the front-rear direction is shorter than the length of the left portion 53 in the front-rear direction.

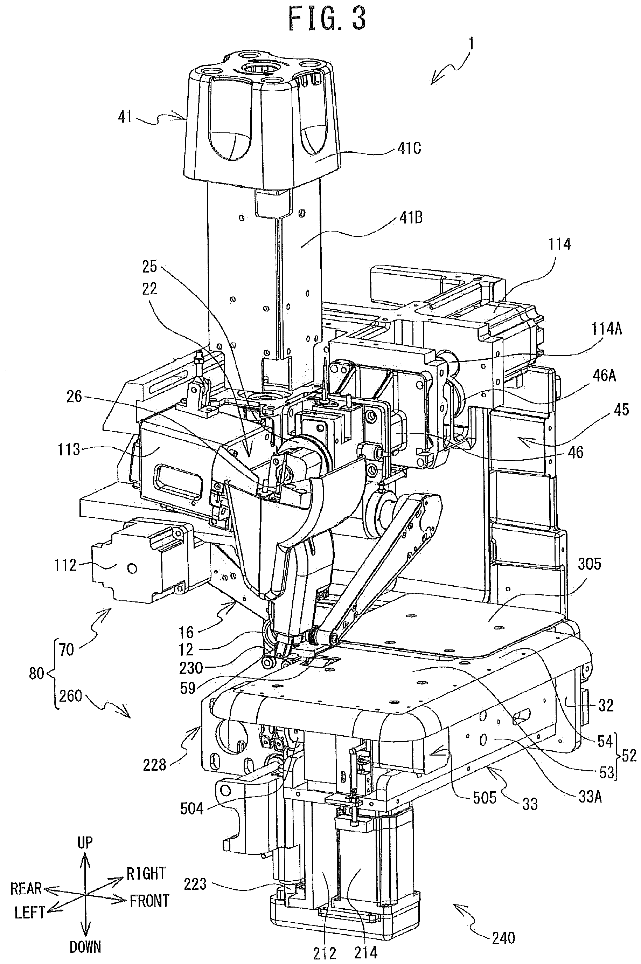

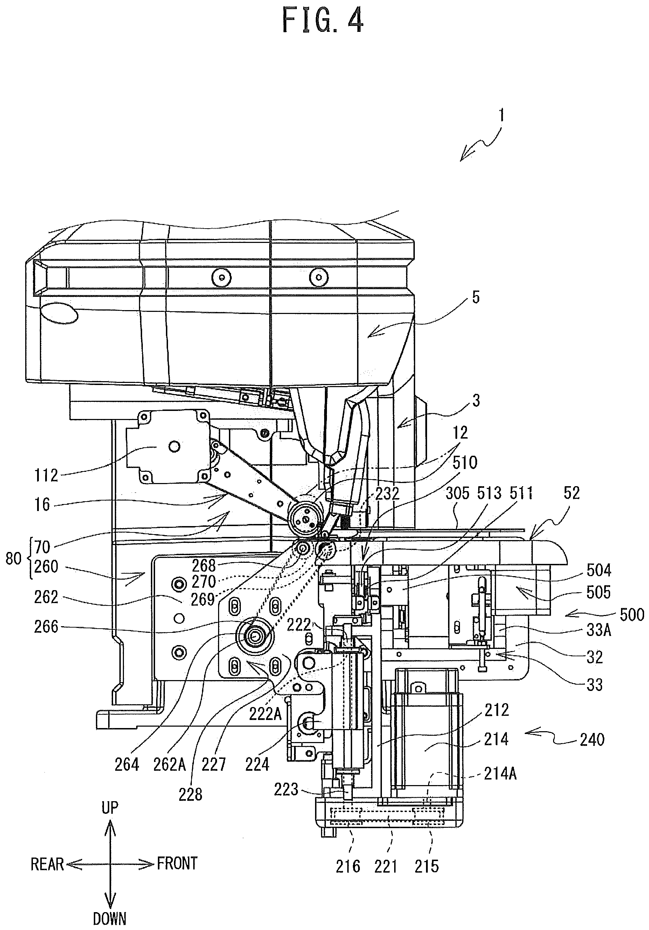

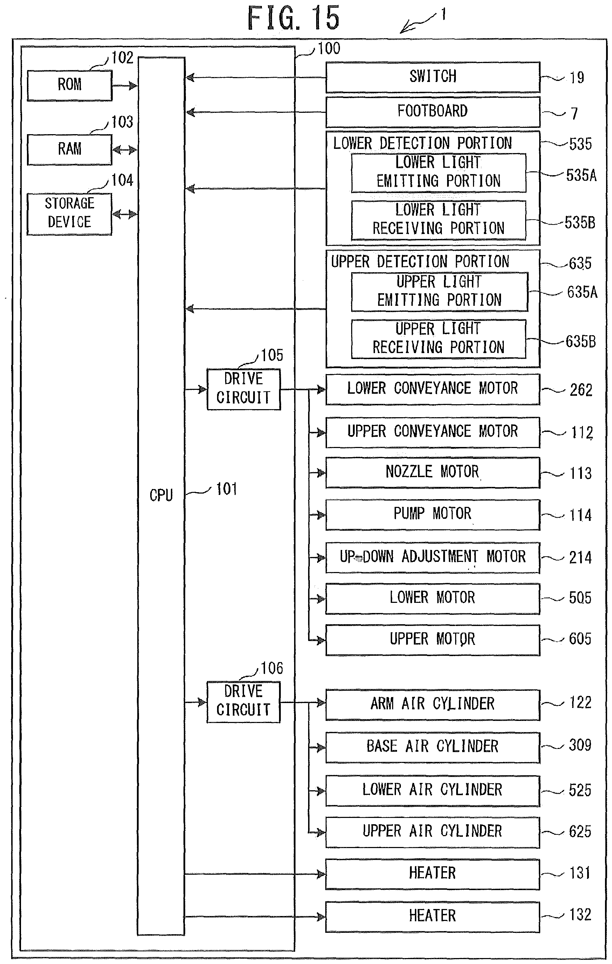

As shown in FIG. 3 and FIG. 4, the head portion 5 supports an upper conveyance mechanism 70. The upper conveyance mechanism 70 is provided with a support arm 16, an upper conveyance roller 12, an arm air cylinder 122 (refer to FIG. 15) and an upper conveyance motor 112. The support arm 16 extends below the head portion 5 from the rear to the front, and further extends forward and downward. The support arm 16 is rotatably supported by the head portion 5. The lower end portion of the support arm 16 rotatably supports the upper conveyance roller 12. The upper conveyance roller 12 rotates, with its axial direction being the left-right direction. The arm air cylinder 122 is provided inside the head portion 5, in a posture along the up-down direction. The arm air cylinder 122 is provided with a shaft that extends in the up-down direction. The shaft of the arm air cylinder 122 is coupled to the rear end portion of the support arm 16. The support arm 16 swings along the up-down direction due to the driving of the arm air cylinder 122.

The upper conveyance motor 112 is provided on the support arm 16. The upper conveyance motor 112 is coupled to the upper conveyance roller 12 via a transmission mechanism that is provided inside the support arm 16. The upper conveyance roller 12 is rotated by the power of the upper conveyance motor 112.

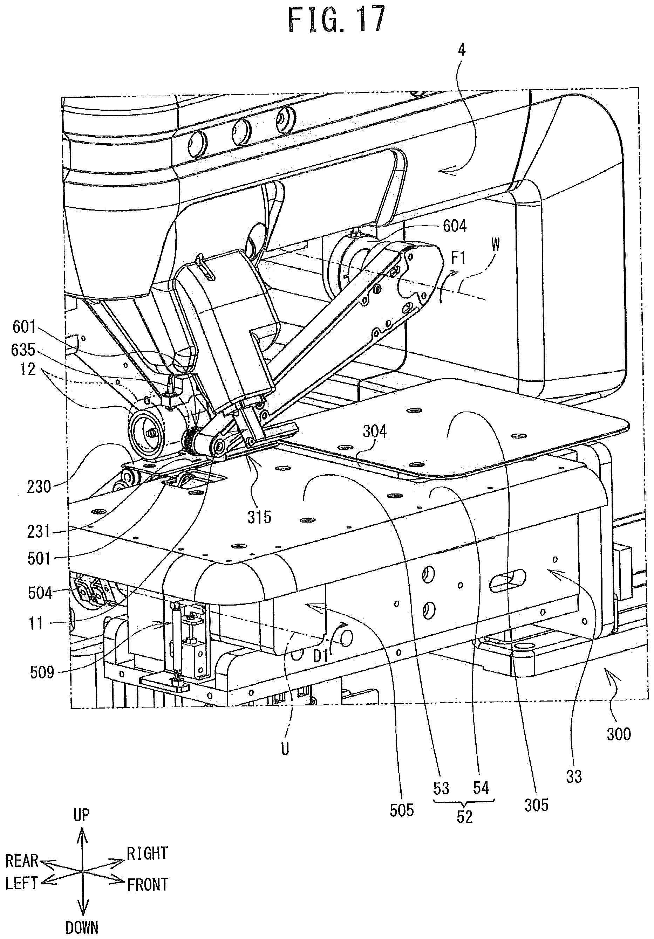

When the arm air cylinder 122 swings the support arm 16, the upper conveyance roller 12 moves between a clamping position and an upper retracted position. In FIG. 4, the upper conveyance roller 12 located at the clamping position is shown by a solid line, and the upper conveyance roller 12 located at the upper retracted position is shown by a chain double-dashed line (this also applies to FIG. 17). The lower sheet 8 and the upper sheet 6 are clamped between the upper conveyance roller 12 located at the clamping position and a lower conveyance roller 270 to be described later. The upper conveyance roller 12 located at the upper retracted position is retracted upward from the upper sheet 6.

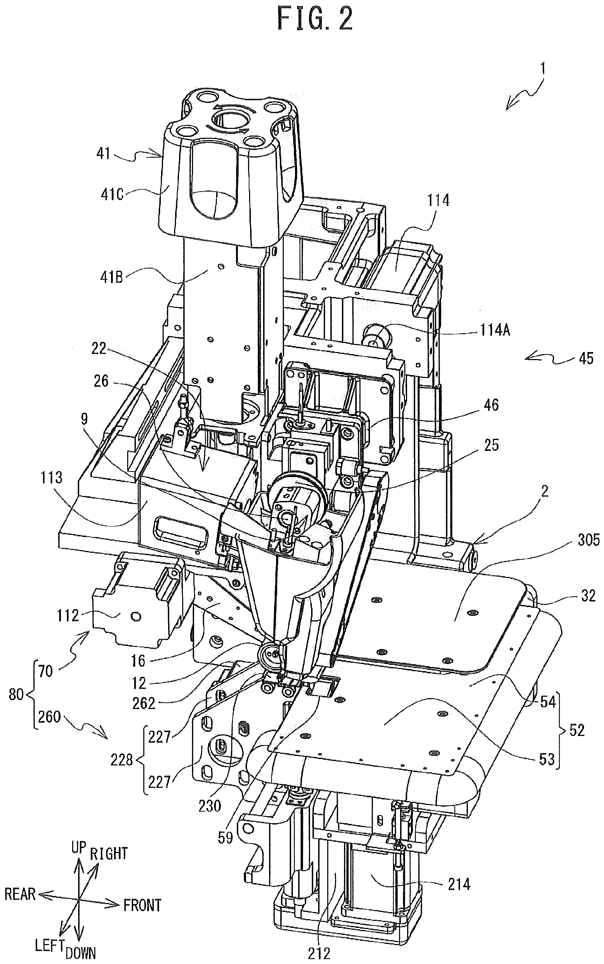

As shown in FIG. 2, FIG. 3 and FIG. 5, the head portion 5 (refer to FIG. 1) is provided with a lever swing mechanism 22. The lever swing mechanism 22 is provided with a nozzle motor 113, a support shaft 26, a lever 9 and a nozzle 11. The nozzle motor 113 is a pulse motor provided on the left side inside the head portion 5. The nozzle motor 113 is provided with an output shaft to which a worm gear is fixed. The support shaft 26 has a cylindrical shape and extends in the left-right direction above the worm gear. The support shaft 26 supports a worm wheel 25 that meshes with the upper end of the worm gear. The support shaft 26 rotates together with the worm wheel 25 due to the power of the nozzle motor 113. The adhesive Z flows from a supply mechanism 45, which will be described later, to the inside of the support shaft 26. A flow path of the adhesive Z is provided inside the support shaft 26.

The lever 9 is provided to the left of the worm wheel 25. The lever 9 has a box shape, and extends downward from the left end of the support shaft 26. A flow path 21 is provided inside the lever 9. The flow path 21 is communicated with the path inside the support shaft 26. The lower end portion of the lever 9 is a nozzle mounting portion 10. The nozzle 11 protrudes downward from the nozzle mounting portion 10 and further protrudes to the right. A right portion of the nozzle 11 has a rod shape that is substantially triangular in a left side view. The nozzle 11 can be mounted on and removed from the nozzle mounting portion 10. The nozzle 11 is mounted on the nozzle mounting portion 10 by screws 14. A nozzle flow path is provided inside the nozzle 11. The nozzle flow path is a flow path of the adhesive Z and is communicated with the flow path 21. A heater 132 (refer to FIG. 15) is provided inside the lever 9, in the vicinity of the flow path 21. The heat of the heater 132 is transmitted to the nozzle 11 via the nozzle mounting portion 10.

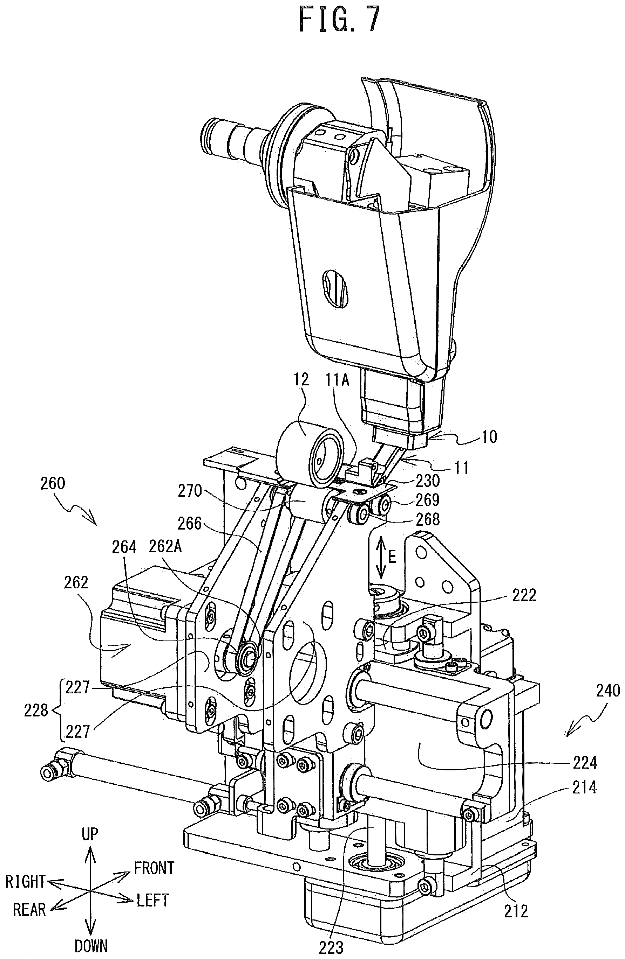

The nozzle 11 is provided with an upper support portion 11A (refer to FIG. 7) and a discharge port 11B. The upper support portion 11A is the upper end portion of the right portion of the nozzle 11 and supports the upper sheet 6 from below. The discharge port 11B is formed in the lower surface of the nozzle 11 and is located below the upper support portion 11A. The discharge port 11B has a plurality of circular holes that are aligned at substantially equal intervals along the left-right direction. The discharge port 11B discharges the adhesive Z onto the lower sheet 8.

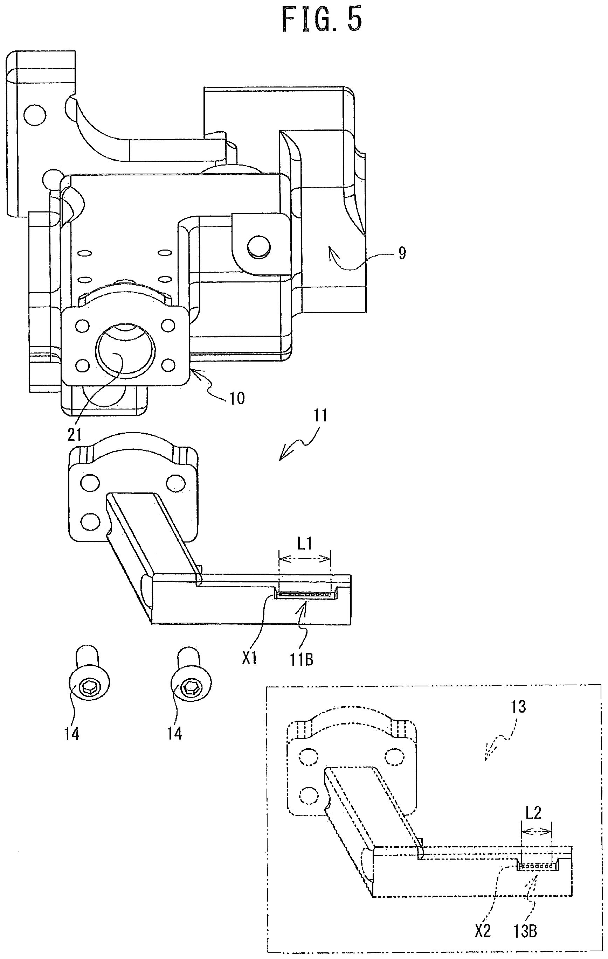

A nozzle 13 (refer to FIG. 5) can be mounted on the nozzle mounting portion 10 in place of the nozzle 11. The shape of the nozzle 13 is substantially the same as the shape of the nozzle 11. The discharge port 13B is formed in the lower surface of the nozzle 13. The discharge port 13B has a plurality of circular holes that are aligned at substantially equal intervals along the left-right direction. The discharge port 13B corresponds to the discharge port 11B. The nozzle 11 and the nozzle 13 are different from each other in discharge width of the adhesive Z. The discharge width of the adhesive Z is a formation range of the discharge port 11B or 13B in the left-right direction. The discharge width (a dimension L1) of the adhesive Z in the nozzle 11 is longer than the discharge width (a dimension L2) of the adhesive Z in the nozzle 13. A discharge left end position X1 of the adhesive Z in the nozzle 11 and a discharge left end position X2 of the adhesive Z in the nozzle 13 are different from each other in the left-right direction. The discharge left end position X1 is the left end of the formation range of the discharge port 11B when the nozzle 11 is mounted on the nozzle mounting portion 10. The discharge left end position X2 is the left end of the formation range of the discharge port 13B when the nozzle 13 is mounted on the nozzle mounting portion 10. In the present embodiment, the discharge left end position X2 is to the right of the discharge left end position X1. Hereinafter, the configuration of the bonding device 1 when the nozzle 11 is mounted on the nozzle mounting portion 10 will be explained.

The support shaft 26 swingably supports the lever 9. Therefore, the support shaft 26 supports the nozzle 11 such that the nozzle 11 can be displaced between a facing position (refer to FIG. 2) and a separated position (refer to FIG. 17). When the nozzle 11 is in the facing position, the discharge port 11B is directed downward and faces the lower sheet 8 from above. The separated position is a position on the counterclockwise side in a left side view around the support shaft 26 with respect to the facing position. When the nozzle 11 is in the separated position, the discharge port 11B is directed forward and downward.

As shown in FIG. 2 and FIG. 3, the head portion 5 is provided with a mounting portion 41 and the supply mechanism 45. The mounting portion 41 is provided substantially in a center portion of the head portion 5. The mounting portion 41 is provided with a cover 41A (refer to FIG. 1), a housing portion 41B, a lid 41C and a heater 131 (refer to FIG. 15). The cover 41A has a substantially cuboid box shape and extends upward from the upper surface of the head portion 5. The cover 41A opens in the up-down direction. The housing portion 41B is provided inside the cover 41A. The housing portion 41B has a substantially cuboid box shape and extends from the interior of the head portion 5 to the upper end of the cover 41A. The housing portion 41B is open upward. A cartridge (not shown in the drawings) is detachably housed inside the housing portion 41B. The lid 41C is detachably provided on the upper side of the housing portion 41B and opens and closes an upper portion of the housing portion 41B. The cartridge houses the hot-melt adhesive Z. The adhesive Z liquefies at a predetermined temperature or more and solidifies at a temperature lower than the predetermined temperature. The heater 131 is provided in the housing portion 41B. The heater 131 heats the cartridge housed in the housing portion 41B. The adhesive Z is melted and liquefied by the heating of the heater 131.

The supply mechanism 45 supplies the adhesive Z in the cartridge to the nozzle 11. The supply mechanism 45 is provided with a pump motor 114 and a gear pump 46. The pump motor 114 is provided inside the arm portion 4 (refer to FIG. 1). The pump motor 114 is provided with an output shaft 114A. The gear pump 46 is provided to the front of the mounting portion 41 and is connected to the right end portion of the support shaft 26. The output shaft 114A is coupled to the gear pump 46 via a gear 46A. The gear pump 46 sucks up the adhesive Z inside the cartridge. The gear pump 46 supplies the sucked up adhesive Z to the nozzle 11 via the support shaft 26 and the lever 9.

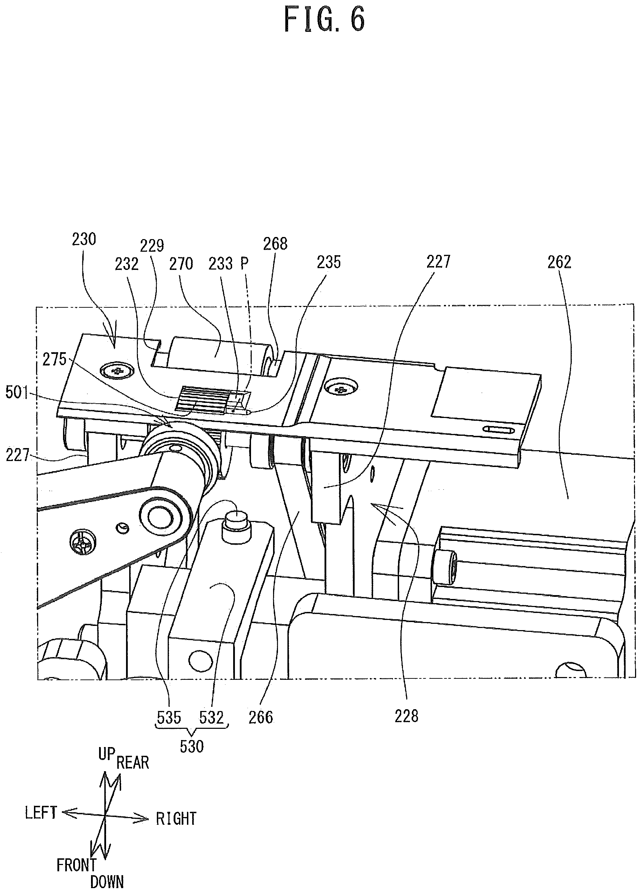

As shown in FIG. 3, FIG. 4, FIG. 6 and FIG. 7, the bonding device 1 is provided with a position adjustment mechanism 240 and a lower conveyance mechanism 260. The position adjustment mechanism 240 adjusts a position in the up-down direction of a nozzle facing member 230 (refer to FIG. 6) that will be described later. As shown in FIG. 4 and FIG. 7, the position adjustment mechanism 240 is provided with a base board 212, an up-down adjustment motor 214, a pulley 215, a screw shaft 223, a pulley 216, a belt 221, a meshing body 222, a coupling body 224, a support body 228 and the nozzle facing member 230. The base board 212 is fixed to the base 33. The up-down adjustment motor 214 is a motor that is provided on the base board 212 and that can rotate forward and backward. The up-down adjustment motor 214 is provided with an output shaft 214A that protrudes downward. The pulley 215 is fixed to the lower end of the output shaft 214A. The screw shaft 223 extends in the up-down direction and is rotatably provided on the base board 212, to the rear of the up-down adjustment motor 214. The screw shaft 223 is, for example, a trapezoidal screw on which a male screw is formed. The pulley 216 is fixed to the screw shaft 223 at the same position as the pulley 215 in the up-down direction. The belt 221 is stretched between the pulleys 215 and 216. The meshing body 222 has a cylindrical shape along the up-down direction. The meshing body 222 has an opening hole 222A. The opening hole 222A is open in the up-down direction, and a female screw is formed on the inside of the opening hole 222A. The screw shaft 223 is inserted through the opening hole 222A, and the male screw of the screw shaft 223 meshes with the female screw of the opening hole 222A. Thus, the screw shaft 223 is rotated by the power of the up-down adjustment motor 214, and the meshing body 222 moves up and down. The coupling body 224 is fixed to the meshing body 222 and extends in the left-right direction. The support body 228 is a plate-shaped member that is supported by the coupling body 224. The support body 228 has a pair of wall portions 227 that are aligned in the left-right direction.

The nozzle facing member 230 is fixed to the upper end of the support body 228. In other words, the nozzle facing member 230 is fixed to the meshing body 222. The nozzle facing member 230 has a plate shape that extends in the front-rear direction, and faces the discharge port 11B of the nozzle 11 from below when the nozzle 11 is in the facing position. The nozzle facing member 230 supports the lower sheet 8 from below together with the support portion 52 (refer to FIG. 2). The nozzle facing member 230 moves up and down together with the support body 228. Thus, the position adjustment mechanism 240 adjusts the position of the nozzle facing member 230 in the up-down direction.

As shown in FIG. 6, the nozzle facing member 230 is provided with a hole portion 232, a convex portion 233, a through hole 235 and an exposure hole 229. The hole portion 232 is a rectangular hole in a plan view that is open in the up-down direction, and is located below the discharge port 11B of the nozzle 11 in the facing position. The convex portion 233 is provided to the right of the hole portion 232 and protrudes upward. The through hole 235 is provided to the right of the hole portion 232 and to the front of the convex portion 233. The through hole 235 is open in the up-down direction and is long in the left-right direction. The through hole 235 is located to the right of the opening hole 59 (refer to FIG. 3). An inside area of the through hole 235 includes a lower detection position P to be described later. The exposure hole 229 is provided to the rear of the hole portion 232 and is open in the up-down direction.

As shown in FIG. 4, FIG. 6 and FIG. 7, the lower conveyance mechanism 260 is supported by the support body 228. The lower conveyance mechanism 260 moves up and down together with the meshing body 222 due to the power of the up-down adjustment motor 214. The lower conveyance mechanism 260 is provided with a lower conveyance motor 262, a pulley 264, a conveyance shaft 268, a roller shaft 269, a belt 266, the lower conveyance roller 270 and an under-nozzle roller 275.

The lower conveyance motor 262 is fixed to the right surface of the right-side wall portion 227. The lower conveyance motor 262 is provided with an output shaft 262A that extends along the left-right direction. The output shaft 262A protrudes to the left from the right-side wall portion 227. The pulley 264 is fixed to the left end portion of the output shaft 262A. The conveyance shaft 268 extends in the left-right direction below the exposure hole 229 and is rotatably supported by the upper end portion of the support body 228. A first coupling pulley is fixed to the conveyance shaft 268.

The roller shaft 269 extends in the left-right direction. The roller shaft 269 is rotatably supported by the support body 228, in front of the conveyance shaft 268 and below the hole portion 232. A second coupling pulley is fixed to the roller shaft 269. The shape of the second coupling pulley is the same as the shape of the first coupling pulley. The belt 266 is stretched around the pulley 264, the first coupling pulley and the second coupling pulley. The lower conveyance roller 270 is fixed to the conveyance shaft 268, to the left of the first coupling pulley, and protrudes upward from the exposure hole 229. The lower conveyance roller 270 rotates together with the conveyance shaft 268, with its axial direction being the left-right direction. The lower conveyance roller 270 comes into contact with the upper conveyance roller 12 located at the clamping position, from below. In other words, the upper conveyance roller 12 comes into contact with the lower conveyance roller 270 from above, and thus the bonding device 1 positions the upper conveyance roller 12 in the clamping position. The under-nozzle roller 275 is fixed to the roller shaft 267, to the left of the second coupling pulley, and protrudes upward from the hole portion 232. The under-nozzle roller 275, rotates in front of the lower conveyance roller 270, together with the roller shaft 269, with its axial direction being the left-right direction. The under-nozzle roller 275 is formed of a metal material. An outer peripheral surface of the under-nozzle roller 275 has a plurality of grooves that extend in the left-right direction. The plurality of grooves are provided at equal intervals over a circumferential direction of the outer peripheral surface of the under-nozzle roller 275. The outer diameter of the under-nozzle roller 275 is the same as the outer diameter of the lower conveyance roller 270. The upper end of the under-nozzle roller 275 is located at substantially the same position as the upper end of the convex portion 233 in the up-down direction. When the nozzle 11 is in the facing position, the upper end of the under-nozzle roller 275 faces the discharge port 11B with a gap therebetween. Using the power of the lower conveyance motor 262, the lower conveyance mechanism 260 rotates the lower conveyance roller 270 and the under-nozzle roller 275. An outer peripheral surface of the lower conveyance roller 270 and the outer peripheral surface of the under-nozzle roller 275 rotate in the same direction and at the same speed around their respective centers of rotation.

Hereinafter, when the upper conveyance mechanism 70 and the lower conveyance mechanism 260 are collectively referred to, they are referred to as a conveyance mechanism 80. The conveyance mechanism 80 conveys the lower sheet 8 and the upper sheet 6 from the front to the rear along the front-rear direction. Therefore, in the present embodiment, the conveyance direction of the lower sheet 8 and the upper sheet 6 is the front-rear direction, the upstream side in the conveyance direction is the front side, and the downstream side in the conveyance direction is the rear side.

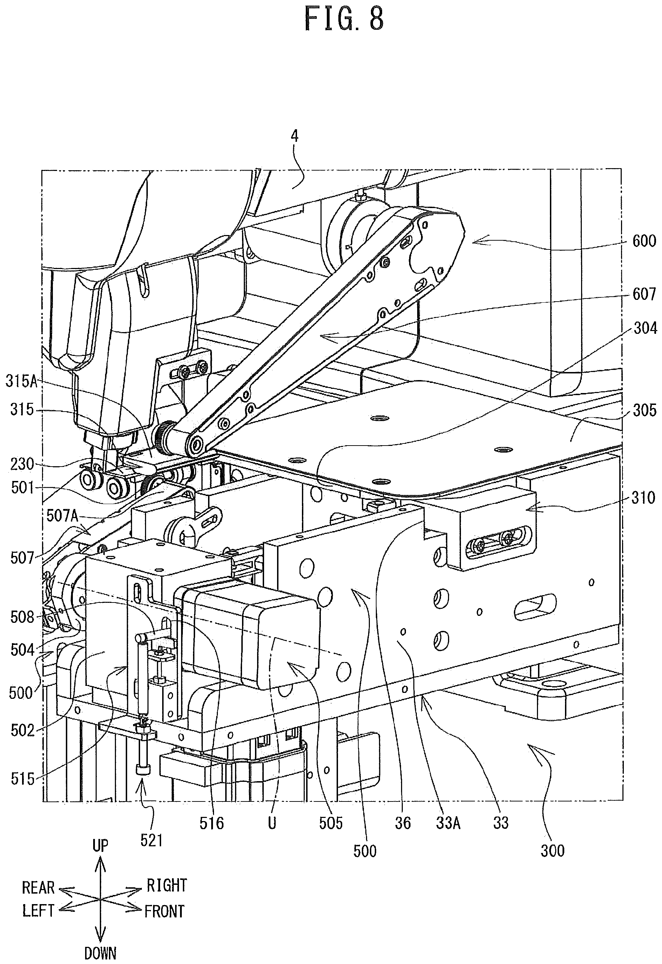

An upper support mechanism 300 will be explained with reference to FIG. 8 to FIG. 10. The upper support mechanism 300 is a mechanism that supports the upper sheet 6, and is provided on the base 33. The upper support mechanism 300 is provided with guide members 302, a movable body 304, a support base 305, a support member 315, a positioning member 310, a base air cylinder 309 and a change mechanism 320.

Each of the guide members 302 is fixed to the inside of the base 33 and has a rod shape that extends in the left-right direction. The two guide members 302 are provided with a gap therebetween in the front-rear direction. The movable body 304 is supported by the two guide members 302 such that the movable body 304 can move left and right. The movable body 304 protrudes above the support portion 52. The upper end of the movable body 304 has a flat surface shape. The support base 305 has a substantially rectangular plate shape in a plan view and is fixed to the upper end of the movable body 304. The support base 305 moves left and right together with the movable body 304.

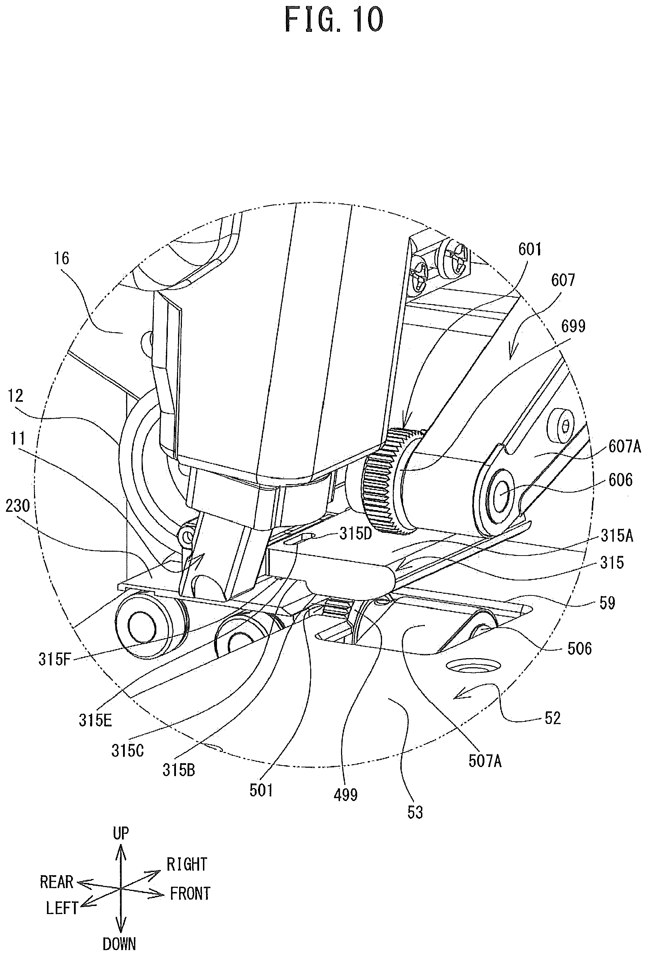

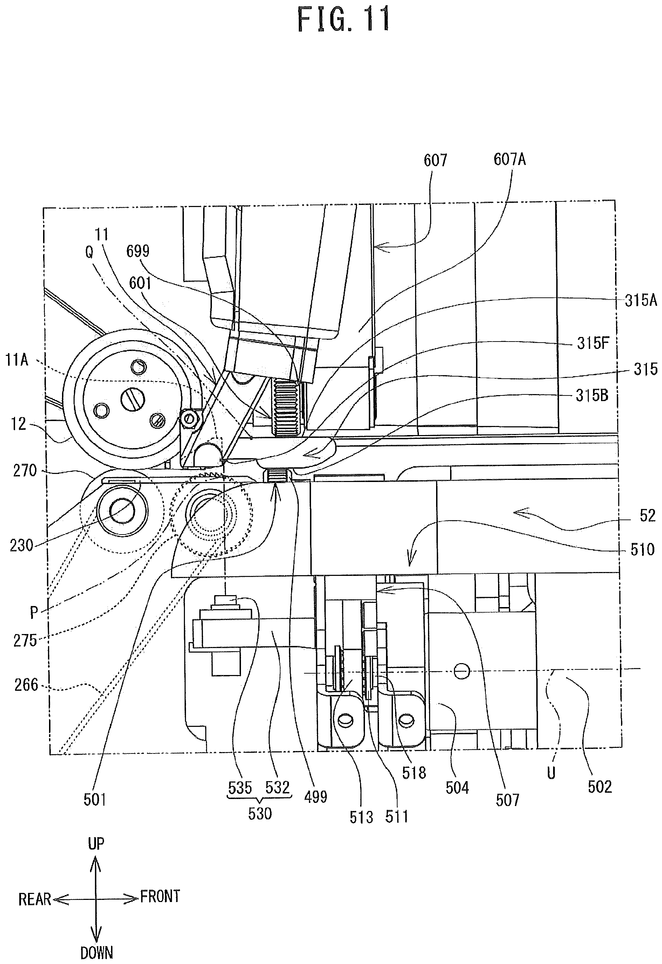

As shown in FIG 8 and FIG. 10, the support member 315 is supported by the upper end of the movable body 304 and protrudes to the left from a rear left portion of the movable body 304. The support member 315 extends in the left-right direction and the front-rear direction and is parallel with the support portion 52. The support member 315 is provided with an upper support surface 315A, an upstream-side lower surface 315B, a downstream-side lower surface 315C, a housing hole 315D, an upper reflection portion 315E and a lower reflection portion 315F. The upper support surface 315A is a flat surface that supports the upper sheet 6 from below. The upper support surface 315A is at the same height as a front end portion of the upper support portion 11A of the nozzle 11 (refer to FIG. 11). The upstream-side lower surface 315B forms the front side of the lower surface of the support member 315, and the downstream-side lower surface 315C forms the rear side of the lower surface of the support member 315. The downstream-side lower surface 315C is at a height position higher than the upstream-side lower surface 315B. The upstream-side lower surface 315B and the downstream-side lower surface 315C are both parallel with the upper support surface 315A.

The housing hole 315D is a concave portion that is recessed downward and that is long in the left-right direction, and is formed in a rear left portion of the upper support surface 315A. The upper reflection portion 315E is formed of a material that can reflect light, and is housed inside the housing hole 315D. The upper reflection portion 315E is located below the upper support surface 315A. The lower reflection portion 315F is formed of a material that can reflect light and is provided on the downstream-side lower surface 315C.

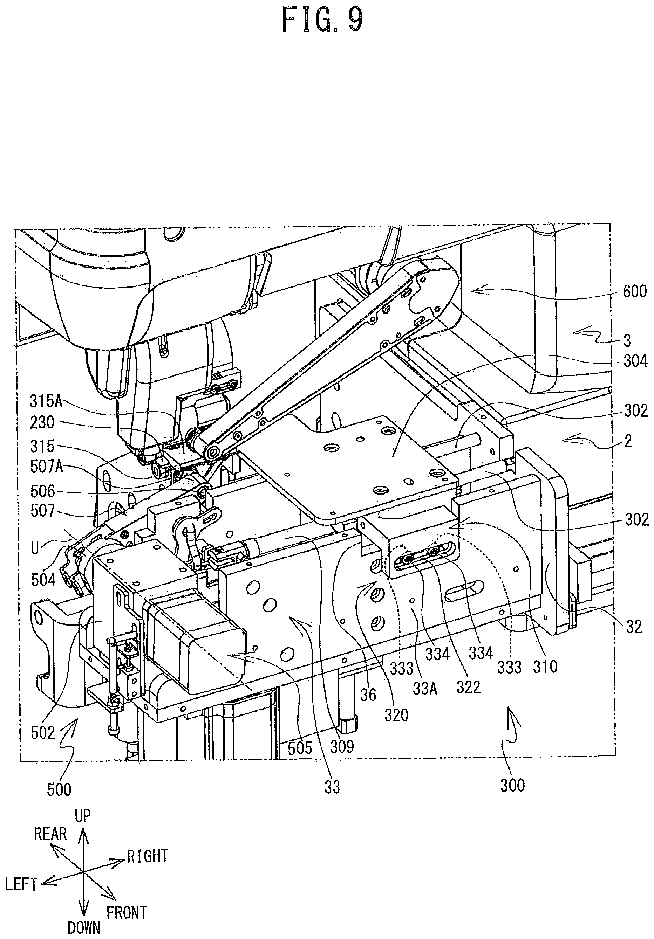

As shown in FIG. 8 and FIG. 9, the positioning member 310 is fixed to a concave portion 36 that is formed in the upper end of the front wall 33A of the base 33. The concave portion 36 is recessed downward from the upper end of the front wall 33A of the base 33. The positioning member 310 is located below the right portion 54 of the support portion 52 (refer to FIG. 2). The movable body 304 can come into contact with and separate from the right end of the positioning member 310.

The movable body 304 can move between an operating position (refer to FIG. 8) and a retracted position (refer to FIG. 17). In other words, the base 33 supports the movable body 304 such that the movable body 304 can move between the operating position and the retracted position. The operating position is a position, in the left-right direction, of the movable body 304 that comes into contact with the positioning member 310. In the present embodiment, the movable body 304 comes into contact with the right end of the positioning member 310, and thus the positioning member 310 positions the movable body 304 in the operating position. When the movable body 304 is in the operating position, the support member 315 is located to the front of the nozzle 11 that is in the facing position, and enters a movable range of the nozzle 11. When the movable body 304 is in the operating position, the downstream-side lower surface 315C faces the through hole 235 (refer to FIG. 6) of the nozzle facing member 230 from above, and the lower reflection portion 315F is located above the inside area of the through hole 235. The retracted position is a position, in the left-right direction, of the movable body 304 that is separated rightward from the positioning member 310. When the movable body 304 is in the retracted position, the support member 315 is located to the right of the movable range of the nozzle 11.

The base air cylinder 309 is an air cylinder that is provided inside the base 33. The base air cylinder 309 has a shaft that extends in the left-right direction. The shaft of the base air cylinder 309 is coupled to a lower portion of the movable body 304, to the rear of the positioning member 310. Therefore, when the base air cylinder 309 moves the shaft left and right, the movable body 304 moves between the operating position and the retracted position.

The change mechanism 320 changes a contact position of the positioning member 310 and the movable body 304 in the left-right direction. In other words, the change mechanism 320 changes the operating position of the movable body 304. The change mechanism 320 is provided with an insertion hole 322, two screw holes 333 and two screw members 334. The insertion hole 322 is provided in the positioning member 310 and is located to the front of the front wall 33A of the base 33. The insertion hole 322 penetrates the positioning member 310 in the front-rear direction and is long in the left-right direction. The two screw holes 333 are circular holes in a front view and are provided in the front wall 33A. Each of the two screw holes 333 faces the insertion hole 322 from the rear. The two screw members 334 are each inserted through the insertion hole 322 from the front. The two screw members 334 are tightened into the two screw holes 333, respectively.

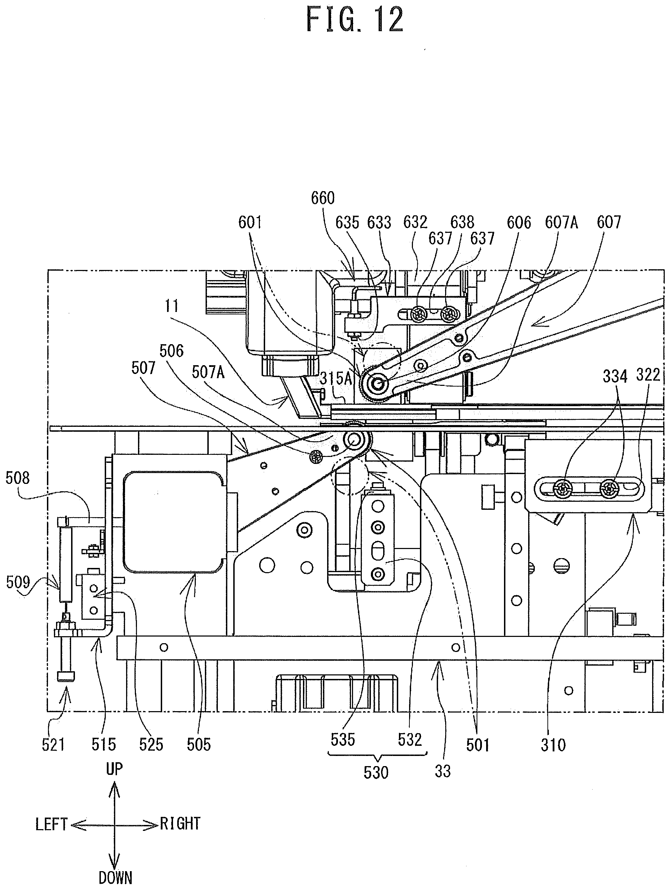

A lower clamp mechanism 500 will be explained with reference to FIG. 4 and FIG. 8 to FIG. 13. The lower clamp mechanism 500 clamps the lower specified end portion 8A (refer to FIG. 18) of the lower sheet 8 between itself and the upstream side-lower surface 315B of the support member 315, and moves the lower specified end portion 8A left and right. The lower clamp mechanism 500 is provided with a lower support body 502, a lower motor support member 504, a lower arm 507, a lower rotating shaft 506 (refer to FIG. 12), a lower clamp roller 501, a lower motor 505, a coupling shaft 508, a lower drive coupling portion 510 (refer to FIG. 11), a lower holding body 515, a bolt 521, a nut 522, a lower elastic member 509 and a lower air cylinder 525.

The lower support body 502 is fixed to the base 33 and has a box shape. The lower support body 502 is located below the left portion 53 of the support portion 52. The lower motor support member 504 extends in the front-rear direction, is inserted through the lower support body 502, and is rotatably supported by the lower support body 502. The center of rotation of the lower motor support member 504 is a lower axis line U that extends in the front-rear direction. The lower motor support member 504 protrudes forward and rearward from the lower support body 502 and is located below the support portion 52. The lower motor support member 504 has a lower shaft insertion hole in a center portion thereof. The lower shaft insertion hole has a circular shape centered on the lower axis line U in a front view and is open in the front-rear direction.

The lower arm 507 is fixed to the rear end of the lower motor support member 504 and extends upward and rightward from the lower motor support member 504. The lower arm 507 can rotate together with the lower motor support member 504 centered on the lower axis line U. A leading end portion 507A of the lower arm 507 is located inside the opening hole 59 in a plan view (refer to FIG. 10). The lower rotating shaft 506 (refer to FIG. 12) is a shaft that protrudes to the rear from the leading end portion 507A, and can rotate with its axial direction being the front-rear direction. The lower clamp roller 501 is fixed to the rear end portion of the lower rotating shaft 506.

As shown in FIG. 10 and FIG. 11, the lower clamp roller 501 is located inside the opening hole 59 in a plan view and is located to the left of the through hole 235 (refer to FIG. 6) of the nozzle facing member 230. When the movable body 304 is in the operating position (refer to FIG. 8), the lower clamp roller 501 can clamp the lower sheet 8 between itself and the upstream-side lower surface 315B of the support member 315. The front end portion of the lower clamp roller 501 has a roller end portion 499. The roller end portion 499 has a inclined shape that extends toward the center side in a radial direction of the lower clamp roller 501 as the roller end portion 499 extends toward the front. The lower clamp roller 501 can swing together with the lower motor support member 504 centered on the lower axis line U.

The lower motor support member 504 rotates around the lower axis line U between a lower contact position (refer to FIG. 12) and a lower separated position (refer to FIG. 12). The lower contact position is a rotation position of the lower motor support member 504 when the upper end of the lower clamp roller 501 is at the same height position as the upstream-side lower surface 315B. In FIG. 12, the lower clamp roller 501 when the lower motor support member 504 is in the lower contact position is shown by a solid line. When the movable body 304 is in the operating position and the lower motor support member 504 is in the lower contact position, the lower clamp roller 501 is in contact with the upstream-side lower surface 315B of the support member 315. The lower separated position is a rotation position of the lower motor support member 504 when the upper end of the lower clamp roller 501 is at a height position lower than the upstream-side lower surface 315B. In FIG. 12, the lower clamp roller 501 when the lower motor support member 504 is in the lower separated position is shown by a two-dot chain line.

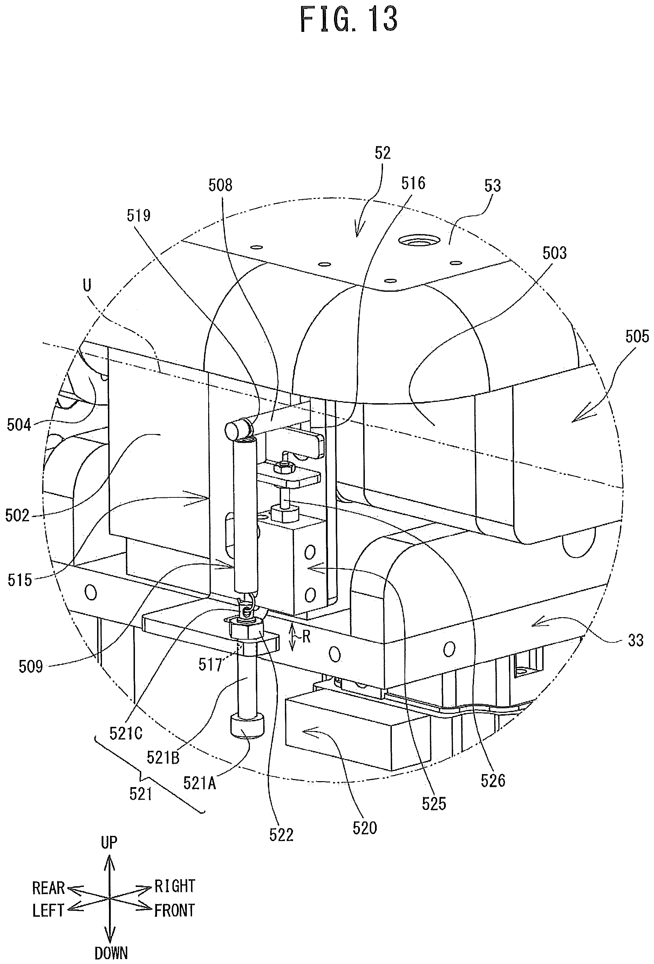

As shown in FIG. 13, the lower motor 505 is located to the front of the lower support body 502 and can rotate forward and backward. The lower motor 505 can rotate around the lower axis line U together with the lower motor support member 504. The lower motor 505 is provided with a housing 503 and an output shaft. The housing 503 is fixed to the front end of the lower motor support member 504. The output shaft protrudes rearward from the housing 503. The output shaft of the lower motor 505 is inserted through the lower shaft insertion hole of the lower motor support member 504 and enters into the interior of the lower support body 502. The coupling shaft 508 protrudes to the left from the front end of the lower motor support member 504. A groove portion 519 is provided in the left end portion of the coupling shaft 508. The groove portion 519 is formed over a circumferential direction of an outer peripheral surface of the coupling shaft 508 and is recessed toward the center side of the coupling shaft 508.

As shown in FIG. 11, the lower drive coupling portion 510 is provided with a shaft member 518, a lower drive pulley 511, a lower driven pulley and a lower belt 513. The shaft member 518 extends in the front-rear direction. The shaft member 518 is inserted through the lower shaft insertion hole of the lower motor support member 504 and the lower arm 507. The front end portion of the shaft member 518 is coupled to the leading end portion of the output shaft of the lower motor 505 (refer to FIG. 13) via a joint. The rear end portion of the shaft member 518 is located inside the base end portion of the lower arm 507. The lower drive pulley 511 is fixed to the rear end portion of the shaft member 518. The lower driven pulley is fixed to a front portion of the lower rotating shaft 506 (refer to FIG. 12). The lower belt 513 is stretched between the lower drive pulley 511 and the lower driven pulley. Thus, the lower drive coupling portion 510 couples the lower motor 505 and the lower clamp roller 501, and the lower motor 505 can drive the lower clamp roller 501.

As shown in FIG. 13, the lower holding body 515 is an L-shaped plate member in a rear view and is fixed to the left surface of the lower support body 502. The lower holding body 515 is provided with a through hole 516 and a lower screw hole 517. The through hole 516 penetrates an upper portion of the lower holding body 515 in the left-right direction and is long in the up-down direction. The coupling shaft 508 is inserted through the through hole 516. The groove portion 519 is located to the left of the through hole 516. The lower screw hole 517 penetrates a lower left portion of the lower holding body 515 in the up-down direction. The lower screw hole 517 is located below the groove portion 519.

The bolt 521 is provided with a head portion 521A, a shaft portion 521B and a coupling hole 521C. The head portion 521A is located below the lower holding body 515. The shaft portion 521B extends upward from the head portion 521A and is screwed into the lower screw hole 517. The coupling hole 521C is a circular hole formed in the upper end of the shaft portion 521B and is located above the lower screw hole 517. The shaft portion 521B is inserted through the nut 522. The nut 522 meshes with the shaft portion 521B. The nut 522 is pressed against and fixed to the upper surface of the lower left portion of the lower holding body 515. Thus, the bolt 521 is fastened to the lower holding body 515, and the nut 522 is located below the coupling hole 521C. Hereinafter, when the lower screw hole 517, the bolt 521 and the nut 522 are collectively referred to, they are referred to as a lower adjustment mechanism 520.

The lower elastic member 509 is a tension spring that is elastically deformable in the up-down direction, for example. The upper end of the lower elastic member 509 is engaged with the groove portion 519. The lower end of the lower elastic member 509 is engaged with the coupling hole 521C. In other words, the lower elastic member 509 couples the lower motor support member 504 and the lower support body 502. The lower elastic member 509 is disposed in a stretched state. The lower elastic member 509 urges the lower motor support member 504 counterclockwise in a front view around the lower axis line U. In other words, the lower elastic member 509 urges the lower motor support member 504 in the rotating direction from the lower separated position toward the lower contact position.

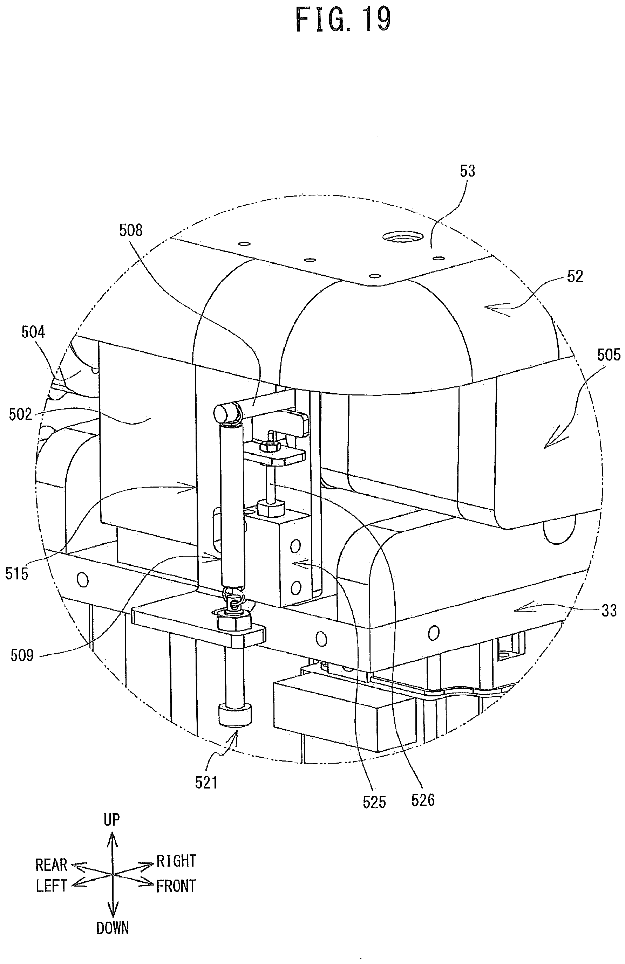

The lower air cylinder 525 is fixed to the left surface of an upper right portion of the lower holding body 515 and is located below the coupling shaft 508. The lower air cylinder 525 has a lower rod 526. The lower rod 526 can move in the up-down direction that is the axial direction of the lower rod 526. The lower air cylinder 525 moves the lower rod 526 up and down between a lower urging position (refer to FIG. 19) and a lower retracted position (refer to FIG. 13). The lower urging position is the upper end of a movable range of the lower rod 526, and the lower retracted position is the lower end of the movable range of the lower rod 526. The lower rod 526 located at the lower urging position urges the coupling shaft 508 upward. In other words, the lower rod 526 located at the lower urging position urges the lower motor support member 504 clockwise in a front view around the lower axis line U, and holds the lower motor support member 504 in the lower separated position. The lower rod 526 located at the lower retracted position is separated downward from the coupling shaft 508. In this case, the lower motor support member 504 is held in the lower contact position.

A lower detection mechanism 530 will be explained with reference to FIG. 11 and FIG. 12. The lower detection mechanism 530 detects whether or not the lower specified end portion 8A (refer to FIG. 18) of the lower sheet 8 is located at the lower detection position P to be described later. The lower detection mechanism 530 is provided with a lower fixing member 532 and a lower detection portion 535. The lower fixing member 532 is fixed to the base 33 below the support portion 52 (refer to FIG. 2). The lower detection portion 535 is an optical sensor fixed to the lower fixing member 532 and is located below the inside area of the through hole 235 (refer to FIG. 6) of the nozzle facing member 230 (refer to FIG. 6). The lower detection portion 535 is provided with a lower light emitting portion 535A (refer to FIG. 15) and a lower light receiving portion 535B (refer to FIG. 15). The lower light emitting portion 535A and the lower light receiving portion 535B are located at the same height position as each other. The lower light emitting portion 535A emits light toward the inside area of the through hole 235. The lower light receiving portion 535B can receive the light that is emitted by the lower light emitting portion 535A and is reflected by the lower reflection portion 315F. The lower light emitting portion 535A and the lower light receiving portion 535B are located below the lower reflection portion 315F when the movable body 304 is in the operating position.

When the movable body 304 is in the operating position and the lower specified end portion 8A is located above the through hole 235, the lower specified end portion 8A blocks the light from the lower light emitting portion 535A. In this case, the lower light receiving portion 535B does not receive the light from the lower light emitting portion 535A. When the movable body 304 is in the operating position and the lower specified end portion 8A is not located above the through hole 235, the lower reflection portion 315F reflects the light from the lower light emitting portion 535A downward, and the lower light receiving portion 535B receives the light. Therefore, the lower detection portion 535 can detect whether or not the lower specified end portion 8A is located above the through hole 235. Hereinafter, a position that is within the inside area of the through hole 235 and that is located directly above the lower light emitting portion 535A is referred to as the lower detection position P. The lower detection position P is a position between the lower reflection portion 315F and the lower light emitting portion 535A when the movable body 304 is in the operating position. The lower detection position P is a predetermined position in the front-rear direction, between the discharge port 11B of the nozzle 11 in the facing position and the lower clamp roller 501, and is a position, in the left-right direction, located to the right of the lower clamp roller 501 (refer to FIG. 6). The lower detection portion 535 detects whether or not the lower specified end portion 8A is located at the lower detection position P.

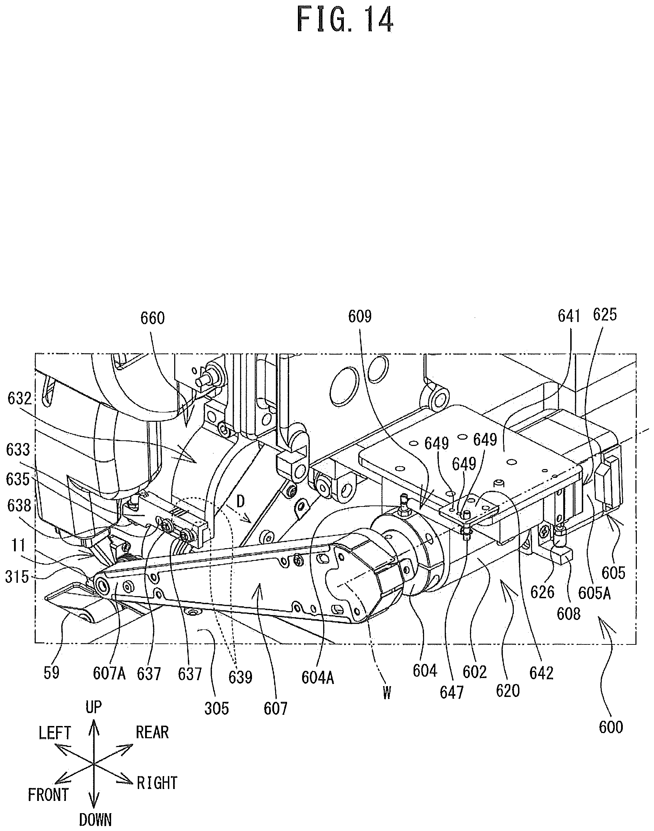

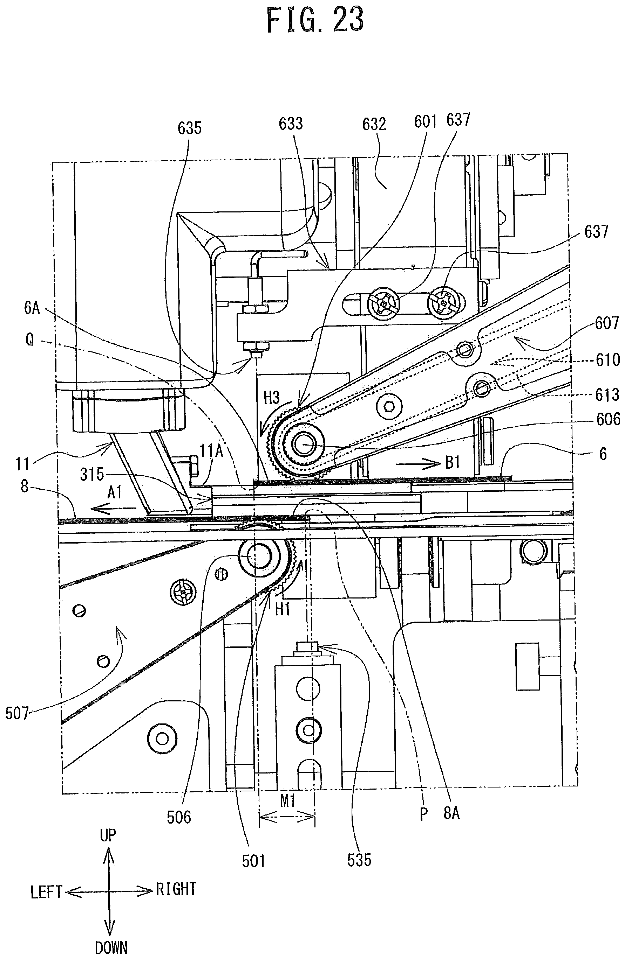

An upper clamp mechanism 600 will be explained with reference to FIG. 10 and FIG. 14. The upper clamp mechanism 600 is provided with a fixed base 641, an upper coupling member 642, an engagement pin 647, an upper support body 602, an upper motor support member 604, an upper arm 607, an upper rotating shaft 606, an upper clamp roller 601, an upper motor 605, a contact portion 608, an upper drive coupling portion 610 (refer to FIG. 23), an upper elastic member 609 and an upper air cylinder 625.

The fixed base 641 is a plate-shaped member that is fixed to the arm portion 4. The upper coupling member 642 is a plate-shaped member that is fixed to the upper surface of a front right portion of the fixed base 641. The upper coupling member 642 is provided with a plurality of engagement holes 649. All of the plurality of engagement holes 649 are located to the front of the fixed base 641 and are aligned at equal intervals in the left-right direction. The number of the engagement holes 649 is three, for example. The engagement pin 647 is selectively engaged with one of the plurality of engagement holes 649. The engagement pin 647 in FIG. 14 is engaged with the engagement hole 649 on the right side. The engagement pin 647 protrudes downward from the upper coupling member 642. Hereinafter, when the upper coupling member 642, the engagement pin 647 and the plurality of engagement holes 649 are collectively referred to, they are referred to as an upper adjustment mechanism 620.

The upper support body 602 has a box shape. The upper support body 602 is fixed to the lower surface of the fixed base 641, to the left of the upper coupling member 642. The upper support body 602 is coupled to the upper coupling member 642. The upper motor support member 604 extends in the front-rear direction. The upper motor support member 604 is inserted through the upper support body 602, and is rotatably supported by the upper support body 602. The center of rotation of the upper motor support member 604 is an upper axis line W that extends in the front-rear direction. The upper motor support member 604 protrudes forward and rearward from the upper support body 602. A coupling pin 604A is provided on the front end portion of the upper motor support member 604. The coupling pin 604A is located to the left of the engagement pin 647 and protrudes upward. An upper shaft insertion hole is provided in a center portion of the upper motor support member 604. The upper shaft insertion hole has a circular shape centered on the upper axis line W in a front view, and is open in the front-rear direction.

The upper arm 607 is fixed to the front end of the upper motor support member 604 and extends downward and leftward from the upper motor support member 604. The upper arm 607 can rotate around the upper axis line W together with the upper motor support member 604. A leading end portion 607A is located above the opening hole 59. The upper rotating shaft 606 is a shaft that protrudes rearward from the leading end portion 607A. The upper rotating shaft 606 can rotate with its axial direction being the front-rear direction. The upper clamp roller 601 is fixed to the rear end portion of the upper rotating shaft 606.

The upper clamp roller 601 is located above the support member 315. The upper clamp roller 601 can swing around the upper axis line W together with the upper motor support member 604. A roller end portion 699 is provided on the front end portion of the upper clamp roller 601. The roller end portion 699 has a round inclined shape that extends toward the center side in a radial direction of the upper clamp roller 601 as the roller end portion 699 extends toward the front. The roller end portion 699 has the same shape as the roller end portion 499.

The upper motor support member 604 rotates around the upper axis line W between an upper contact position (refer to FIG. 12) and an upper separated position (refer to FIG. 12). The upper contact position is a rotation position of the upper motor support member 604 when the lower end of the upper clamp roller 601 is at the same height position as the upper support surface 315A of the support member 315. In FIG. 12, the upper clamp roller 601 when the upper motor support member 604 is in the upper contact position is shown by a solid line. When the movable body 304 is in the operating position and the upper motor support member 604 is in the upper contact position, the upper clamp roller 601 is in contact with the upper support surface 315A of the support member 315. The upper separated position is a rotation position of the upper motor support member 604 when the lower end of the upper clamp roller 601 is located above the upper support surface 315A. In FIG. 12, the upper clamp roller 601 when the upper motor support member 604 is in the upper separated position is shown by a two-dot chain line.

The upper motor 605 is located to the rear of the upper support body 602 and can rotate forward and backward. The upper motor 605 is provided with a housing 605A and an output shaft. The housing 605A is fixed to the rear end of the upper motor support member 604. Therefore, the upper motor 605 can rotate around the upper axis line W together with the upper motor support member 604. The output shaft of the upper motor 605 protrudes forward from the housing 605A. The output shaft of the upper motor 605 is inserted through the upper shaft insertion hole of the upper motor support member 604 and enters into the interior of the upper support body 602. The contact portion 608 is an L-shaped plate member in a front view and is fixed to the right surface of the rear end of the upper motor support member 604.

The upper drive coupling portion 610 (refer to FIG. 23) is provided with an upper shaft member, an upper drive pulley, an upper driven pulley and an upper belt 613 (refer to FIG. 23). The upper shaft member extends in the front-rear direction. The upper shaft member is inserted through the upper shaft insertion hole of the upper motor support member 604 and the upper arm 607. The rear end portion of the upper shaft member is coupled to the leading end portion of the output shaft of the upper motor 605 via a joint. The front end portion of the upper shaft member is located inside the base end portion of the upper arm 607. The upper drive pulley is fixed to the front end portion of the upper shaft member. The upper driven pulley is fixed to a front portion of the upper rotating shaft 606. The upper belt 613 is stretched between the upper drive pulley and the upper driven pulley. Thus, the upper drive coupling portion 610 couples the upper motor 605 and the upper clamp roller 601, and the upper motor 605 can drive the upper clamp roller 601.

The upper elastic member 609 shown in FIG. 14 is a tension spring that is elastically deformable in the left-right direction, for example. The left end of the upper elastic member 609 is engaged with the coupling pin 604A, and the right end of the upper elastic member 609 is engaged with the engagement pin 647. In other words, the upper elastic member 609 couples the upper motor support member 604 and the upper support body 602. The upper elastic member 609 is disposed in a stretched state. The upper elastic member 609 urges the upper motor support member 604 clockwise in a front view around the upper axis line W. In other words, the upper elastic member 609 urges the upper motor support member 604 in the rotating direction from the upper contact position toward the upper separated position. Due to the weight of the upper arm 607, the upper drive coupling portion 610 and the like, a rotating power toward the upper contact position acts on the upper motor support member 604. The elastic member 609 reduces the rotating power.

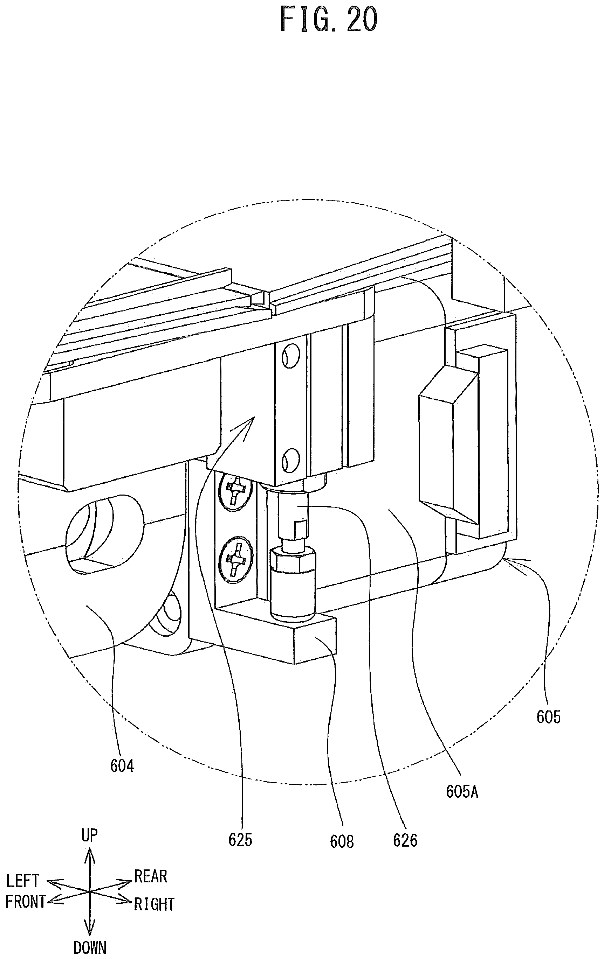

The upper air cylinder 625 is fixed to the lower surface of a rear right portion of the fixed base 641. The upper air cylinder 625 has an upper rod 626. The upper rod 626 is located above a right portion of the contact portion 608. The upper rod 626 can move in the up-down direction that is the axial direction of the upper rod 626. The upper air cylinder 625 moves the upper rod 626 up and down between an upper urging position (refer to FIG. 20) and an upper retracted position (refer to FIG. 14). The upper urging position is the lower end of a movable range of the upper rod 626. The upper retracted position is the upper end of the movable range of the upper rod 626. The upper rod 626 located at the upper urging position urges the contact portion 608 downward. In other words, the upper rod 626 located at the upper urging position urges the upper motor support member 604 clockwise in a front view around the upper axis line W, and holds the upper motor support member 604 in the upper separated position. The upper rod 626 located at the upper retracted position is separated upward from the contact portion 608. In this case, the upper motor support member 604 is held in the upper contact position.

An upper detection portion support mechanism 660 will be explained with reference to FIG. 12 and FIG. 14. The upper detection portion support mechanism 660 is provided with an upper fixing member 632, two fastening holes 639, a holding member 633, a long hole 638, and two fastening members 637. The upper fixing member 632 is fixed to the arm portion 4 (refer to FIG. 1). The upper fixing member 632 is a plate-shaped member that extends downward from the arm portion 4. The two fastening holes 639 are provided in the lower end portion of the upper fixing member 632 such that the fastening holes 639 are aligned in the left-right direction. The holding member 633 extends in the left-right direction. The holding member 633 is provided to the front of the lower end portion of the upper fixing member 632. The long hole 638 penetrates a right portion of the holding member 633 in the front-rear direction. The long hole 638 is long in the left-right direction and faces each of the two fastening holes 639 from the front. Each of the two fastening members 637 is inserted through the long hole 638 from the front. The two fastening members 637 are respectively fastened into the two fastening holes 639. Thus, the holding member 633 is fixed to the upper fixing member 632.

The holding member 633 holds an upper detection portion 635. The upper detection portion 635 is a known optical sensor. When the movable body 304 is in the operating position, the upper detection portion 635 is located above an inside area of the housing hole 315D (refer to FIG. 10) of the support member 315. The upper detection portion 635 is provided with an upper light emitting portion 635A (refer to FIG. 15) and an upper light receiving portion 635B (refer to FIG. 15). The upper light emitting portion 635A and the upper light receiving portion 635B are located at the same height position as each other. The upper light emitting portion 635A emits light toward the inside area of the housing hole 315D. The upper light receiving portion 635B can receive the light that is emitted by the upper light emitting portion 635A and is reflected by the upper reflection portion 315E. The upper light emitting portion 635A and the upper light receiving portion 635B are both located above the upper reflection portion 315E when the movable body 304 is in the operating position.

When the movable body 304 is in the operating position and the upper specified end portion 6A (refer to FIG. 18) is located above the housing hole 315D, the upper specified end portion 6A blocks the light from the upper light emitting portion 635A. In this case, the upper light receiving portion 635B does not receive the light from the upper light emitting portion 635A. When the movable body 304 is in the operating position and the upper specified end portion 6A is not located above the housing hole 315D, the upper reflection portion 315E reflects the light upward, and thus the upper light receiving portion 635B receives the light. Therefore, the upper detection portion 635 can detect whether or not the upper specified end portion 6A is located above the housing hole 315D. Hereinafter, when the movable body 304 is in the operating position, a position that is within the inside area of the housing hole 315D and that is located directly below the upper light emitting portion 635A is referred to as an upper detection position Q (refer to FIG. 10). The upper detection position Q is a position between the upper reflection portion 315E and the upper light emitting portion 635A when the movable body 304 is in the operating position. The upper detection position Q is a predetermined position in the front-rear direction, between the discharge port 11B of the nozzle 11 in the facing position and the upper clamp roller 601, and is a position, in the left-right direction, located to the left of the upper clamp roller 601. The upper detection position Q is substantially the same position as the lower detection position P in the front-rear direction. The upper detection portion 635 detects whether or not the upper specified end portion 6A is located at the upper detection position Q.

An electrical configuration of the bonding device 1 will be explained with reference to FIG. 15. The bonding device 1 is provided with a control device 100. The control device 100 is provided with a CPU 101, a ROM 102, a RAM 103, a storage device 104, and drive circuits 105 and 106. The CPU 101 performs integrated control of operations of the bonding device 1. The CPU 101 is connected to the ROM 102, the RAM 103, the storage device 104, a switch 19, a footboard 7, the lower detection portion 535, the upper detection portion 635, the drive circuits 105 and 106, and the heaters 131 and 132. The ROM 102 stores programs to execute various types of processing. The RAM 103 temporarily stores various types of information. The storage device 104 is nonvolatile and stores various setting values and the like. The switch 19 is provided on a lower portion of the front surface of the head portion 5. An operator operates the switch 19 and inputs various commands to the bonding device 1. The switch 19 outputs, to the CPU 101, information indicating the various commands, as detection results. The footboard 7 is provided on a lower portion of the work bench and is operated by a foot of the operator. The operator inputs a start command or an end command of bonding processing to be described later, via the footboard 7. The footboard 7 outputs, to the CPU 101, information indicating the start command or the end command of the bonding processing, as a detection result. The lower detection portion 535 and the upper detection portion 635 output detection results to the CPU 101.

By transmitting a control signal to the drive circuit 105, the CPU 101 performs drive control of each of the lower conveyance motor 262, the upper conveyance motor 112, the nozzle motor 113, the pump motor 114, the up-down adjustment motor 214, the lower motor 505 and the upper motor 605. By transmitting a control signal to the drive circuit 106, the CPU 101 performs drive control of each of the arm air cylinder 122, the base air cylinder 309, the lower air cylinder 525 and the upper air cylinder 625. The CPU 101 performs drive control of the heaters 131 and 132. The heater 131 heats the adhesive Z in the cartridge. The heater 132 heats the adhesive Z flowing inside the lever 9 toward the discharge port 11B. The adhesive Z is liquefied when heated by the heaters 131 and 132.

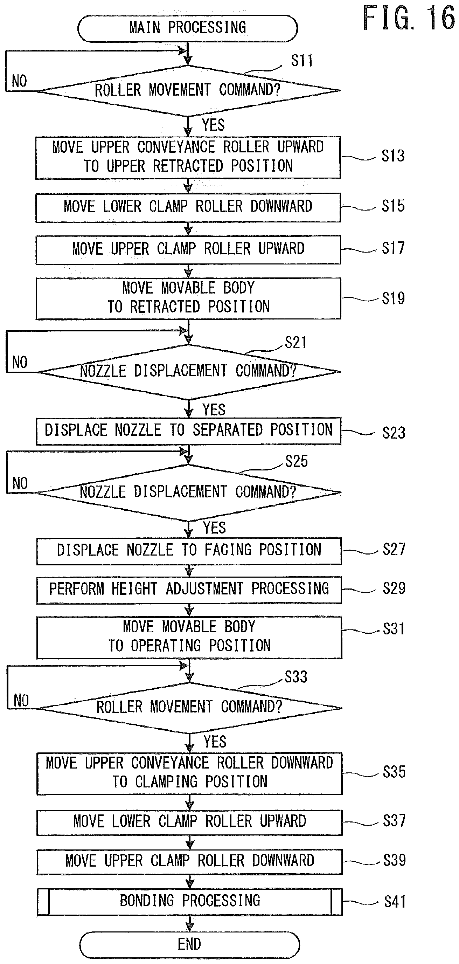

Main processing will be explained with reference to FIG. 16 to FIG. 24. For example, the operator inputs a start command of the main processing to the switch 19. The CPU 101 reads out a program to start the main processing from the ROM 102 and starts the main processing. Before starting the main processing, the bonding device 1 is in an initial state (refer to FIG. 1). When the bonding device 1 is in the initial state, the nozzle 11 is in the facing position, the upper conveyance roller 12 is in the clamping position, the lower rod 526 is in the lower retracted position, the upper rod 626 is in the upper retracted position, the lower motor support member 504 is in the lower contact position, the upper motor support member 604 is in the upper contact position, and the movable body 304 is in the operating position.

As shown in FIG. 16 to FIG. 20, the CPU 101 determines whether or not a roller movement command has been detected, on the basis of a detection result of the switch 19 (step S11). The roller movement command is a command to move each of the upper conveyance roller 12, the lower clamp roller 501 and the upper clamp roller 601. The CPU 101 stands by until the roller movement command is detected (no at step S11). When the operator inputs the roller movement command to the switch 19 (yes at step S11), the CPU 101 performs drive control of the arm air cylinder 122 (refer to FIG. 15) and moves the upper conveyance roller 12 upward (step S13). The upper conveyance roller 12 moves upward from the clamping position to the upper retracted position (refer to FIG. 17).

The CPU 101 performs drive control of the lower air cylinder 525 and moves the lower clamp roller 501 downward (step S15). Due to the driving of the lower air cylinder 525, the lower rod 526 moves upward from the lower retracted position to the lower urging position (refer to FIG. 19). The lower motor support member 504 resists the urging force of the lower elastic member 509 and rotates from the lower contact position to the lower separated position (an arrow D1 in FIG. 17). The lower clamp roller 501 rotates downward and separates downward from the upstream-side lower surface 315B (refer to FIG. 12).

The CPU 101 performs drive control of the upper air cylinder 625 and moves the upper clamp roller 601 upward (step S17). Due to the driving of the upper air cylinder 625, the upper rod 626 moves downward from the upper retracted position to the upper urging position (refer to FIG. 20). The upper motor support member 604 resists the weight of the upper arm 607, the upper drive coupling portion 610 and the like, and rotates from the upper contact position to the upper separated position (an arrow F1 in FIG. 17). The upper clamp roller 601 separates upward from the upper support surface 315A (refer to FIG. 10) of the support member 315 (refer to FIG. 12). The CPU 101 performs drive control of the base air cylinder 309 and moves the movable body 304 from the operating position to the retracted position (step S19). The support member 315 is retracted to the right from the movable range of the nozzle 11 and moves to a position above and to the right of the lower clamp roller 501 and below and to the right of the upper clamp roller 601 (refer to FIG. 17).

On the basis of the detection result of the switch 19, the CPU 101 determines whether or not a nozzle displacement command has been detected (step S21). The nozzle displacement command is a command to displace the nozzle 11 between the facing position and the separated position. The CPU 101 stands by until the nozzle displacement command is detected (no at step S21). When the operator inputs the nozzle displacement command to the switch 19 (yes at step S21), the CPU 101 performs drive control of the nozzle motor 113 and displaces the nozzle 11 from the facing position to the separated position (step S23). The CPU 101 inputs a predetermined pulse signal to the drive circuit 105 as a control signal. Since the movable body 304 is in the retracted position, the nozzle 11 is displaced to the separated position without coming into contact with the support base 305 (refer to FIG. 17). When the nozzle 11 reaches the separated position, the driving of the nozzle motor 113 is stopped.

On the basis of the detection result of the switch 19, the CPU 101 determines whether or not the nozzle displacement command has been detected (step S25). The CPU 101 stands by until the nozzle displacement command is detected (no at step S25). During the standby of the CPU 101 (no at step S25), the operator places the lower sheet 8 on the left portion 53 of the support portion 52 and on the nozzle facing member 230. The lower specified end portion 8A placed on the nozzle facing member 230 is located to the right of the through hole 235 (refer to FIG. 6), for example. Each of the lower conveyance roller 270, the convex portion 233 of the nozzle facing member 230, and the under-nozzle roller 275 comes into contact with the lower sheet 8 from below. When the operator who has placed the lower sheet 8 inputs the nozzle displacement command to the switch 19 (yes at step S25), the CPU 101 performs drive control of the nozzle motor 113 and displaces the nozzle 11 from the separated position to the facing position (step S27). The CPU 101 inputs the predetermined pulse signal to the drive circuit 105 as the control signal, and thus the nozzle 11 is displaced to the facing position (refer to FIG. 18). The discharge port 11B faces the lower sheet 8 from above.

The CPU 101 performs height adjustment processing (step S29). The height adjustment processing is processing that adjusts the position of the nozzle facing member 230 in the up-down direction. For example, the operator inputs a command to move the nozzle facing member 230 upward or downward to the switch 19. In accordance with the detection result of the switch 19, the CPU 101 performs drive control of the up-down adjustment motor 214 (refer to FIG. 7) and moves the nozzle facing member 230 up and down (arrows E in FIG. 7). The operator operates the switch 19 so that an appropriate gap is provided between the lower sheet 8 and the discharge port 11B (refer to FIG. 5). In this case, the movable body 304 is in the retracted position and the upper sheet 6 is not placed on the support base 305. Therefore, it is easy for the operator to visually check the distance in the up-down direction between the nozzle facing member 230 and the discharge port 11B. When the operator inputs an end command of the height adjustment processing to the switch 19, the CPU 101 advances the processing to step S31.

The CPU 101 performs drive control of the base air cylinder 309 and moves the movable body 304 from the retracted position to the operating position (step S31). The support member 315 moves to a position above the lower clamp roller 501 and below the upper clamp roller 601 (refer to FIG. 18).

On the basis of the detection result of the switch 19, the CPU 101 determines whether or not the roller movement command has been detected (step S33). The CPU 101 stands by until the roller movement command is detected (no at step S33). During the standby of the CPU 101 (no at step S33), the operator places the upper sheet 6 on the upper support portion 11A (refer to FIG. 7), the upper support surface 315A and the support base 305. The rear end portion of the upper sheet 6 overlaps on the rear end portion of the lower sheet 8 from above, between the lower conveyance roller 270 and the upper conveyance roller 12 (refer to FIG. 22). When the operator who has placed the upper sheet 6 inputs the roller movement command to the switch 19 (yes at step S33), the CPU 101 performs drive control of the arm air cylinder 122 and moves the upper conveyance roller12 downward to the clamping position (step S35). The lower sheet 8 and the upper sheet 6 are clamped between the upper conveyance roller 12 and the lower conveyance roller 270 (refer to FIG. 22).

The CPU 101 performs drive control of the lower air cylinder 525 and moves the lower clamp roller 501 upward (step S37). Due to the driving of the lower air cylinder 525, the lower rod 526 moves downward from the lower urging position to the lower retracted position (refer to FIG. 13). Due to the urging force of the lower elastic member 509, the lower motor support member 504 rotates from the lower separated position to the lower contact position (an arrow D2 in FIG. 18). The lower clamp roller 501 clamps the lower sheet 8 between itself and the upstream-side lower surface 315B of the support member 315 (refer to FIG. 22).

The CPU 101 performs drive control of the upper air cylinder 625 and moves the upper clamp roller 601 downward (step S39). Due to the driving of the upper air cylinder 625, the upper rod 626 moves upward from the upper urging position to the upper retracted position (refer to FIG. 14). Due to the weight of the upper arm 607, the upper drive coupling portion 610 and the like, the upper motor support member 604 rotates from the upper separated position to the upper contact position (an arrow F2 in FIG. 18). The upper clamp roller 601 clamps the upper sheet 6 between itself and the upper support surface 315A (refer to FIG. 22). The CPU 101 performs the bonding processing (step S41).

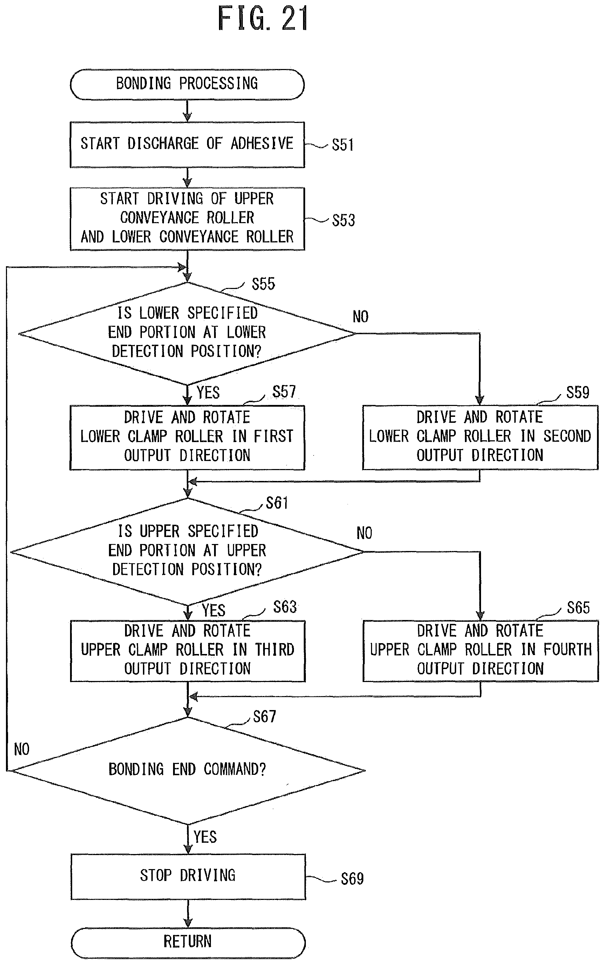

The bonding processing will be explained with reference to FIG. 21 to FIG. 24. The bonding processing is processing that bonds the lower specified end portion 8A of the lower sheet 8 and the upper specified end portion 6A of the upper sheet 6 using the adhesive Z. For example, when the operator inputs the start command of the bonding processing by operating the footboard 7 using his or her foot, the CPU 101 starts the bonding processing.

The CPU 101 performs drive control of the heaters 131 and 132 and the pump motor 114 and starts the discharge of the adhesive Z (step S51). The adhesive Z is liquefied by the heat generated by the heaters 131 and 132. Due to the driving of the pump motor 114, the supply mechanism 45 supplies the adhesive Z to the nozzle 11. The discharge port 11B (refer to FIG. 5) discharges the adhesive Z toward the lower specified end portion 8A located below the discharge port 11B (refer to FIG. 22).

The CPU 101 performs drive control of the upper conveyance motor 112 and the lower conveyance motor 262 and starts the driving of the upper conveyance roller 12 and the lower conveyance roller 270, respectively (step S53). The upper conveyance roller 12 and the lower conveyance roller 270 work in concert with each other and convey the lower sheet 8 and the upper sheet 6 rearward (refer to an arrow Y in FIG. 22). The under-nozzle roller 275 rotates together with the lower conveyance roller 270 and assists the rearward conveyance of the lower sheet 8. The upper conveyance roller 12, the lower conveyance roller 270 and the under-nozzle roller 275 convey the lower sheet 8 and the upper sheet 6 rearward while the discharge port 11B is applying the adhesive Z onto the lower specified end portion 8A.

On the basis of a detection result of the lower detection portion 535, the CPU 101 determines whether or not the lower specified end portion 8A is located at the lower detection position P (step S55). When the lower detection portion 535 detects that the lower specified end portion 8A is located at the lower detection position P (refer to FIG. 23), the CPU 101 determines that the lower specified end portion 8A is located at the lower detection position P (yes at step S55). The CPU 101 performs drive control of the lower motor 505 and drives and rotates the lower clamp roller 501 in a first output direction (step S57). The first output direction is a rotation direction of the lower clamp roller 501 when the upper end of the lower clamp roller 501 moves to the left, and corresponds to an arrow H1 in FIG. 23. The lower clamp roller 501 that rotates in the first output direction moves the lower specified end portion 8A to the left (an arrow A1 in FIG. 23). The CPU 101 advances the processing to step S61.

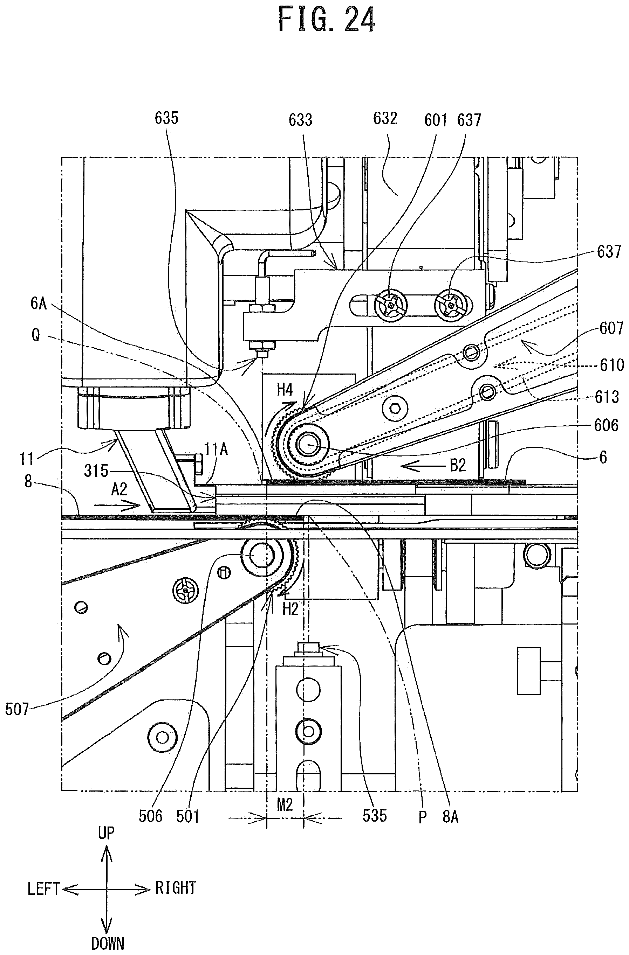

When the lower detection portion 535 detects that the lower specified end portion 8A is not located at the lower detection position P (refer to FIG. 24), the CPU 101 determines that the lower specified end portion 8A is not located at the lower detection position P (no at step S55). The CPU 101 performs drive control of the lower motor 505 and drives and rotates the lower clamp roller 501 in a second output direction (step S59). The second output direction is a direction opposite to the first output direction and corresponds to an arrow H2 in FIG. 24. The lower clamp roller 501 that rotates in the second output direction moves the lower specified end portion 8A to the right (an arrow A2 in FIG. 24). The CPU 101 advances the processing to step S61.

On the basis of a detection result of the upper detection portion 635, the CPU 101 determines whether or not the upper specified end portion 6A is located at the upper detection position Q (step S61). When the upper detection portion 635 detects that the upper specified end portion 6A is located at the upper detection position Q (refer to FIG. 23), the CPU 101 determines that the upper specified end portion 6A is located at the upper detection position Q (yes at step S61). The CPU 101 performs drive control of the upper motor 605 and drives and rotates the upper clamp roller 601 in a third output direction (step S63). The third output direction is a rotation direction of the upper clamp roller 601 when the lower end of the upper clamp roller 601 moves to the right, and corresponds to an arrow H3 in FIG. 23. The upper clamp roller 601 that rotates in the third output direction moves the upper specified end portion 6A to the right (an arrow B1 in FIG. 23). The CPU 101 advances the processing to step S67.

When the upper detection portion 635 detects that the upper specified end portion 6A is not located at the upper detection position Q (refer to FIG. 24), the CPU 101 determines that the upper specified end portion 6A is not located at the upper detection position Q (no at step S61). The CPU 101 performs drive control of the upper motor 605 and drives and rotates the upper clamp roller 601 in a fourth output direction (step S65). The fourth output direction is a direction opposite to the third output direction and corresponds to an arrow H4 in FIG. 24. The upper clamp roller 601 that rotates in the fourth output direction moves the upper specified end portion 6A to the left (an arrow B2 in FIG. 24). The CPU 101 advances the processing to step S67.

On the basis of a detection result of the footboard 7, the CPU 101 determines whether or not the end command of the bonding processing has been detected (step S67). The CPU 101 repeats the processing from step S55 to step S67 until the end command of the bonding processing is detected (no at step S67). The pump motor 114, the upper conveyance motor 112, the lower conveyance motor 262, the lower motor 505 and the upper motor 605 continue to be driven, and the heaters 131 and 132 continue to generate heat.

When the CPU 101 repeats the processing from step S55 to step S67, the lower sheet 8 to which the adhesive Z has been applied enters between the lower conveyance roller 270 and the upper conveyance roller 12. The upper conveyance roller 12 and the lower conveyance roller 270 pressure-bond the lower specified end portion 8A and the upper specified end portion 6A using the adhesive Z, and convey them to the rear. Thus, the bonding device 1 bonds the lower specified end portion 8A and the upper specified end portion 6A via the adhesive Z.

When the CPU 101 repeats the processing from step S55 to step S67, the lower clamp roller 501 is driven to rotate in the first output direction or the second output direction. For example, when the lower specified end portion 8A is curved toward the front side and the left side (refer to FIG. 18), the lower specified end portion 8A passes through the left side of the lower detection position P along with the rearward movement of the lower sheet 8 (no at step S55). The CPU 101 drives and rotates the lower clamp roller 501 in the second output direction (step S59). Therefore, even when the lower specified end portion 8A is curved toward the front side and the left side, the bonding device 1 can suppress a positional displacement in the left-right direction between the discharge port 11B and the lower specified end portion 8A that passes below the discharge port 11B.

When the lower specified end portion 8A extends linearly in the front-rear direction, the CPU 101 drives and rotates the lower clamp roller 501 alternately in the first output direction and the second output direction (yes at step S55, step S57, no at step S55, step S59). Thus, the bonding device 1 can suppress the positional displacement in the left-right direction between the discharge port 11B and the lower specified end portion 8A that passes below the discharge port 11B.

When the CPU 101 repeats the processing from step S55 to step S67, the upper clamp roller 601 is driven to rotate in the third output direction or the fourth output direction. When the upper specified end portion 6A is curved toward the front side and the right side (refer to FIG. 18), the upper specified end portion 6A passes through the right side of the upper detection position Q along with the rearward movement of the upper sheet 6 (no at step S61). The CPU 101 drives and rotates the upper clamp roller 601 in the fourth output direction (step S65). Therefore, the bonding device 1 can suppress a positional displacement in the left-right direction between the discharge port 11B and the upper specified end portion 6A that passes the upper support portion 11A.

When the upper specified end portion 6A extends linearly in the front-rear direction, the CPU 101 drives and rotates the upper clamp roller 601 alternately in the third output direction and the fourth output direction (yes at step S61, step S63, no at step S61, step S65). Thus, the bonding device 1 can suppress the positional displacement in the left-right direction between the discharge port 11B and the upper specified end portion 6A that passes the upper support portion 11A.

By the CPU 101 repeating the processing from step S55 to step S67, the bonding device 1 adjusts the positions, in the left-right direction, of the lower specified end portion 8A and the upper specified end portion 6A that are conveyed toward the nozzle 11. Therefore, the length in the left-right direction of the upper specified end portion 6A that overlaps with the lower specified end portion 8A in the up-down direction (hereinafter referred to as an overlapping amount of the upper specified end portion 6A) is kept within a predetermined range. The overlapping amount of the upper specified end portion 6A corresponds to a dimension M1 in FIG. 23 and corresponds to a dimension M2 in FIG. 24.

When the operator inputs the end command of the bonding processing by operating the footboard 7 using his or her foot (yes at step S67), the CPU 101 stops the driving of each of the upper conveyance motor 112, the lower conveyance motor 262, the pump motor 114, the lower motor 505, the upper motor 605, and the heaters 131 and 132 (step S69). The CPU 101 ends the bonding processing and ends the main processing.

A method for changing the overlapping amount of the upper specified end portion 6A when the bonding processing is performed will be explained with reference to FIG. 5, FIG. 9, FIG. 10 and FIG. 14. As an example, in the present embodiment, the discharge width (the dimension L2) of the nozzle 13 is shorter than the discharge width (the dimension L1) of the nozzle 11, and the discharge left end position X2 of the nozzle 13 is to the right of the discharge left end position X1 of the nozzle 11. Therefore, when the nozzle 13 is mounted on the nozzle mounting portion 10 in place of the nozzle 11, it is necessary for the operator to make the overlapping amount of the upper specified end portion 6A (the dimension M1 in FIG. 23, the dimension M2 in FIG. 24) shorter than when the nozzle 11 is mounted. The operator displaces the upper detection position Q to the right and thus shortens the overlapping amount of the upper specified end portion 6A.

As shown in FIG. 14, the operator loosens the fastening members 637 to an extent that inhibits the fastening members 637 from dropping out from the fastening holes 639. The holding member 633 becomes movable in the left-right direction within a range of the long hole 638. The operator moves the upper detection portion 635 to the right (an arrow D) together with the holding member 633. The operator once again fastens the two fastening members 637 into the two fastening holes 639, respectively.

As shown in FIG. 9, the operator loosens the screw members 334 to an extent that inhibits the screw members 334 from dropping out from the screw holes 333. The operator moves the positioning member 310 to the right by an amount corresponding to the rightward movement of the upper detection portion 635. The operator once again fastens the two screw members 334 into the two screw holes 333, respectively. Since the fixing position of the positioning member 310 with respect to the base 33 is displaced to the right, the contact position of the positioning member 310 and the movable body 304 is displaced to the right. Thus, the operating position of the movable body 304 is displaced to the right. The position of the upper reflection portion 315E in the left-right direction when the movable body 304 is in the operating position is displaced to the right. Through the above-described operations, the operator can displace the upper detection position Q to the right. Thus, the bonding device 1 can shorten the overlapping amount of the upper specified end portion 6A when the bonding processing is performed.

A method for adjusting an elastic deformation amount of the lower elastic member 509 will be explained with reference to FIG. 13. The operator needs to adjust a clamping force of the lower clamp roller 501 (refer to FIG. 10) in accordance with a thickness of the lower sheet 8 or a frictional coefficient of the lower sheet 8. The clamping force of the lower clamp roller 501 is a force by which the lower clamp roller 501 clamps the lower sheet 8 between itself and the upstream-side lower surface 315B.

The operator loosens the nut 522 to an extent that inhibits the nut 522 from coming off from the shaft portion 521B, for example. The operator adjusts the position of the bolt 521 in the up-down direction (an arrow R). Thus, the elastic deformation amount of the lower elastic member 509 changes. After adjusting the elastic deformation amount of the lower elastic member 509 by a predetermined amount, the operator presses the nut 522 against the upper surface of the lower left portion of the lower holding body 515 and fixes the nut 522 thereto once again. Thus, the operator can adjust the elastic deformation amount of the lower elastic member 509 and can adjust the clamping force of the lower clamp roller 501.

A method for adjusting an elastic deformation amount of the upper elastic member 609 will be explained with reference to FIG. 14. The operator needs to adjust a clamping force of the upper clamp roller 601 (refer to FIG. 10) in accordance with a thickness of the upper sheet 6 or a frictional coefficient of the upper sheet 6. The clamping force of the upper clamp roller 601 is a force by which the upper clamp roller 601 clamps the upper sheet 6 between itself and the upper support surface 315A. The operator removes the engagement pin 647 engaged with the engagement hole 649 provided on the right side, and engages the engagement pin 647 with the engagement hole 649 provided in the center or on the left side. The elastic deformation amount of the upper elastic member 609 becomes smaller. Thus, the operator can adjust the elastic deformation amount of the upper elastic member 609 and can change the clamping force of the upper clamp roller 601.

As explained above, when the bonding processing is performed, the conveyance mechanism 80 conveys the upper sheet 6, and the lower sheet 8 to which the adhesive Z has been applied. The lower clamp roller 501 is driven to rotate in the first output direction or the second output direction, and thus the lower specified end portion 8A passes the vicinity of the lower detection position P. The upper clamp roller 601 is driven to rotate in the third output direction or the fourth output direction, and thus the upper specified end portion 6A passes the vicinity of the upper detection position Q. When the nozzle 11 discharges the adhesive Z from the discharge port 11B, the positional displacement of the lower specified end portion 8A and the upper specified end portion 6A with respect to the nozzle 11 does not easily occur in the specified direction. Therefore, the bonding device 1 can suppress the positional displacement of an end portion of the lower sheet 8 and an end portion of the upper sheet 6 with respect to the nozzle 11, and can stably convey the lower sheet 8 and the upper sheet 6.

The lower clamp roller 501 is located to the left of the lower detection position P. Along with the conveyance of the lower sheet 8, the lower specified end portion 8A, which is formed to extend while being curved toward the front side and the left side, tends to pass the left side of the lower detection position P (no at step S55). Even in this case, before the lower specified end portion 8A deviates to the left from a position between the lower clamp roller 501 and the upstream-side lower surface 315B, the CPU 101 drives and rotates the lower clamp roller 501 in the second output direction (step S59). Thus, the lower specified end portion 8A is unlikely to deviate from the position between the lower clamp roller 501 and the upstream-side lower surface 315B. The upper clamp roller 601 is located to the right of the upper detection position Q. Along with the conveyance of the upper sheet 6, the upper specified end portion 6A, which is formed to extend while being curved toward the front side and the right side, tends to pass the right side of the upper detection position Q (no at step S61). Even in this case, before the upper specified end portion 6A deviates to the right from a position between the upper clamp roller 601 and the upper support surface 315A, the CPU 101 drives and rotates the upper clamp roller 601 in the fourth output direction (step S65). Thus, the upper specified end portion 6A is unlikely to deviate from the position between the upper clamp roller 601 and the upper support surface 315A. Thus, the bonding device 1 can further suppress the positional displacement of the lower specified end portion 8A and the upper specified end portion 6A with respect to the nozzle 11.

The upper support surface 315A is located at the same height as the upper end of the front end portion of the upper support portion 11A of the nozzle 11. The upper sheet 6 located between the upper support surface 315A and the upper support portion 11A is likely to extend in the front-rear direction and is unlikely to be curved along the up-down direction. Therefore, wrinkles are unlikely to occur in the upper sheet 6, and thus the bonding device 1 can stably convey the upper sheet 6. Further, the support member 315 extends in parallel with the support portion 52. The bonding device 1 can shorten the distance between the support member 315 and the support portion 52 in the up-down direction. Since the bonding device 1 can reduce the space between the support member 315 and the support portion 52 in the up-down direction, it is easy for the operator to visually check the nozzle 11 from the front side. Thus, when the operator places the upper sheet 6 on the support base 305 and on the upper support portion 11A, the operator can easily recognize the positional relationship of the upper sheet 6 with respect to the nozzle 11.

The roller end portion 499 has a inclined shape that extends toward the center side in the radial direction of the lower clamp roller 501 as the roller end portion 499 extends toward the front. Therefore, the roller end portion 499 is unlikely to catch on the lower sheet 8. The roller end portion 699 has a inclined shape that extends toward the center side in the radial direction of the upper clamp roller 601 as the roller end portion 699 extends toward the front. Therefore, the roller end portion 699 is unlikely to catch on the upper sheet 6. Thus, the bonding device 1 can more stably convey the lower sheet 8 and the upper sheet 6.

The lower light emitting portion 535A emits light toward the through hole 235 of the nozzle facing member 230 from below. Since the nozzle facing member 230 faces the discharge port 11B of the nozzle 11 in the facing position, from below, the bonding device 1 can make the lower detection position P closer to the nozzle 11. Therefore, the bonding device 1 can shorten the distance in the conveyance direction between the lower detection position P and the nozzle 11 in the facing position. Thus, the bonding device 1 can further suppress the positional displacement between the lower specified end portion 8A and the nozzle 11.

The support member 315 is provided with the lower reflection portion 315F and the upper reflection portion 315E. The support member 315 can have a function to reflect the light that has not been blocked by the lower specified end portion 8A to the lower light receiving portion 535B, as well as a function to reflect the light that has not been blocked by the upper specified end portion 6A to the upper light receiving portion 635B. Thus, the bonding device 1 can be simplified.

The nozzles 11 and 13, whose discharge widths are different from each other, are selectively mounted on the nozzle mounting portion 10. When the nozzle 13 is mounted on the nozzle mounting portion 10 in place of the nozzle 11, the operator moves the upper detection portion 635 to the right. Further, in accordance with the position of the upper detection portion 635 in the left-right direction, the operator changes, in the left-right portion, the position of the upper reflection portion 315E on the movable body 304 in the operating position. Thus, the bonding device 1 can adjust the upper detection position Q of the upper specified end portion 6A in the left-right direction, in accordance with the discharge width of each of the nozzles 11 and 13. Therefore, the bonding device 1 can diversify a method of bonding the lower sheet 8 and the upper sheet 6. The operator can adjust the position of the upper detection portion 635 in the left-right direction by loosening the fastening members 637 to an extent that inhibits the fastening members 637 from dropping out from the fastening holes 639. Thus, the bonding device 1 can make it easier to change the position of the upper detection portion 635 in the left-right direction.

After the nozzle 11 has moved to the facing position (step S27) and before the bonding processing is performed (step S41), the movable body 304 moves from the retracted position to the operating position (step S31). During a period in which the nozzle 11 is in the separated position and the movable body 304 is in the retracted position (no at step S25), the operator places the lower sheet 8 on the support portion 52. Therefore, the operator can easily dispose the lower sheet 8 on the support portion 52.

The change mechanism 320 changes the position at which the positioning member 310 positions the movable body 304, in the left-right direction. Therefore, in accordance with the adjustment of the upper detection portion 635 in the left-right direction, the operator can change, in the left-right direction, the position of the upper reflection portion 315E on the movable body 304 in the operating position. As a result, since the upper detection position Q is displaced in the left-right position, the bonding device 1 can adjust the overlapping amount of the upper specified end portion 6A in the left-right direction. The operator can change the fixing position of the positioning member 310 with respect to the base 33 in the left-right direction, by loosening the screw members 334 to an extent that inhibits the screw members 334 from dropping out from the screw holes 333. Thus, the bonding device 1 can make it easier to change the operating position of the movable body 304 in the left-right direction.

The lower elastic member 509 urges the lower motor support member 504 in the rotating direction in which the lower clamp roller 501 protrudes upward from the opening hole 59. The bonding device 1 can maintain the clamping force of the lower clamp roller 501 to be equal to or more than a certain value. Thus, the lower clamp roller 501 can stably clamp the lower sheet 8 between itself and the upstream-side lower surface 315B of the support member 315. Further, the clamping force of the upper clamp roller 601 tends to be excessive due to the weight of the upper arm 607, the upper drive coupling portion 610 and the like. In the present embodiment, the upper elastic member 609 urges the upper motor support member 604 in the rotating direction in which the upper clamp roller 601 separates upward from the support member 315. As a result, the clamping force of the upper clamp roller 601 does not easily become excessive. Thus, the upper clamp roller 601 can stably clamp the upper sheet 6 between itself and the upper support surface 315A.

The lower adjustment mechanism 520 adjusts the elastic deformation amount of the lower elastic member 509. Therefore, the bonding device 1 can adjust the clamping force of the lower clamp roller 501. In the present embodiment, the operator can adjust the elastic deformation amount of the lower elastic member 509, by loosening the nut 522 and adjusting the position of the bolt 521 in the up-down direction. Thus, the bonding device 1 can simplify the adjustment of the elastic deformation amount of the lower elastic member 509. In a similar manner, the upper adjustment mechanism 620 adjusts the elastic deformation amount of the upper elastic member 609. The bonding device 1 can adjust the clamping force of the upper clamp roller 601. In the present embodiment, the operator can adjust the elastic deformation amount of the upper elastic member 609 by changing the engagement hole 649 to be engaged with the engagement pin 647. Thus, the bonding device 1 can simplify the adjustment of the elastic deformation amount of the upper elastic member 609.

The lower motor support member 504 can rotate between the lower contact position and the lower separated position. Therefore, when the lower motor support member 504 is in the lower separated position, the operator can easily dispose the lower sheet 8 between the lower clamp roller 501 and the upstream-side lower surface 315B of the support member 315. In the present embodiment, while the lower air cylinder 525 is holding the lower motor support member 504 in the lower separated position (step S15, no at step S21), the operator places the lower sheet 8 on the support portion 52. Thus, since the lower motor support member 504 automatically rotates to the lower separated position, the operator can easily dispose the lower sheet 8 between the lower clamp roller 501 and the support member 315.

The upper motor support member 604 can rotate between the upper contact position and the upper separated position. Therefore, when the upper motor support member 604 is in the upper separated position, the operator can easily dispose the upper sheet 6 between the upper clamp roller 601 and the upper support surface 315A of the support member 315. In the present embodiment, while the upper air cylinder 625 is holding the upper motor support member 604 in the upper separated position (step S17, no at step S21), the operator places the upper sheet 6 on the upper support surface 315A of the support member 315. Thus, since the upper motor support member 604 automatically rotates to the upper separated position, the operator can easily dispose the upper sheet 6 between the upper clamp roller 601 and the support member 315.

The outer peripheral surface of the lower conveyance roller 270 and the outer peripheral surface of the under-nozzle roller 275 rotate in the same direction and at the same speed around their respective centers of rotation. The speed at which the upper conveyance roller 12 and the lower conveyance roller 270 convey the lower sheet 8 is the same as the speed at which the under-nozzle roller 275 conveys the lower sheet 8. Thus, the lower sheet 8 does not easily become stretched between the lower conveyance roller 270 and the under-nozzle roller 275. Therefore, the lower sheet 8 does not easily shrink after it has been bonded to the upper sheet 6 using the adhesive Z. Unevenness does not easily occur in the upper sheet 6 and the lower sheet 8 that have been bonded together. Thus, the bonding device 1 can secure stability in the quality of the lower sheet 8 and the upper sheet 6 that have been bonded together. The lower sheet 8 is conveyed by the lower conveyance roller 270 and the under-nozzle roller 275. Thus, the bonding device 1 can reduce a portion of the lower sheet 8 that is contact with a means for conveying the lower sheet 8, in comparison with a case when the lower sheet 8 is conveyed by a belt. Thus, the bonding device 1 can reduce a resistance force in moving the lower sheet 8 left and right. Thus, when the lower specified end portion 8A is curved toward the front side and the left side, the lower sheet 8 is easy to follow the rotation driving of the lower clamp roller 501

In the explanation above, the support portion 52 and the nozzle facing member 230 are an example of a lower support portion of the present invention. The support shaft 26 is an example of a nozzle support member of the present invention. The base air cylinder 309 is an example of a drive portion of the present invention. The lower holding body 515 is an example of a lower coupling member of the present invention. The engagement pin 647 is an example of an engagement portion of the present invention. The lower air cylinder 525 is an example of a lower move portion of the present invention. The upper air cylinder 625 is an example of an upper move portion of the present invention. The front-rear direction is an example of a conveyance direction of the present invention. The left-right direction is an example of a specified direction of the present invention. The CPU 101 that performs the processing at step S51 and step S53 is an example of a discharge-conveyance control portion of the present invention. The CPU 101 that performs the processing at step S57 is an example of a first motor control portion of the present invention. The CPU 101 that performs the processing at step S59 is an example of a second motor control portion of the present invention. The CPU 101 that performs the processing at step S63 is an example of a third motor control portion of the present invention. The CPU 101 that performs the processing at step S65 is an example of a fourth motor control portion of the present invention. The CPU 101 that performs the processing at step S23 is an example of a nozzle movement control portion of the present invention. The CPU 101 that performs the processing at step S31 is an example of a movable body movement control portion of the present invention. The CPU 101 that performs the processing at step S15 is an example of a first lower control portion of the present invention. The CPU 101 that performs the processing at step S37 is an example of a second lower control portion of the present invention. The CPU 101 that performs the processing at step S13 is an example of a first upper move control portion of the present invention. The CPU 101 that performs the processing at step S39 is an example of a second upper move control portion of the present invention.

The present invention is not limited to the above-described embodiment. The discharge ports 11B and 13B may have a rectangular shape that is long in the left-right direction, for example. The upper clamp roller 601 need not necessarily be provided with the roller end portion 699. For example, a peripheral end of the front side of the upper clamp roller 601 may have a shape other than an inclined shape. For example, a peripheral end of the front side of the upper clamp roller 601 may be chamfered roundly. The lower clamp roller 501 need not necessarily be provided with the roller end portion 499. Each of the lower elastic member 509 and the upper elastic member 609 may be a coil spring, a torsion spring, a leaf spring or the like. The bonding device 1 may be provided with a solenoid or the like, instead of being provided with the lower air cylinder 525 or the upper air cylinder 625. The nozzle 11 may be movable in the left-right direction, for example. The nozzle 11 may be movable in the left-right direction, for example. In this case, instead of the support shaft 26, the bonding device 1 may be provided with a rail that extends in the left-right direction, for example. The rail supports the nozzle 11 so as to be movable left and right. The movable body 304 may be rotatable between the operating position and the retracted position, with its axial direction being the up-down direction. In this case, the change mechanism 320 changes the position, in the rotation direction of the movable body 304, at which the positioning member 310 positions the movable body 304.

The lower reflection portion 315F may be capable of reflecting the light from the lower light emitting portion 535A to the left. In this case, the lower light receiving portion 535B may be provided to the left of the nozzle facing member 230 and at the same height position as the lower reflection portion 315F. The bonding device 1 need not necessarily be provided with the upper reflection portion 315E. In this case, one of the upper light receiving portion 635B and the lower light receiving portion 535B may be housed in the housing hole 315D, for example.

Only one of the nozzles 11 and 13 may be fixed to the nozzle mounting portion 10. In this case, the bonding device 1 need not necessarily be provided with the change mechanism 320. In this case, the fixing position of the holding member 633 with respect to the upper fixing member 632 need not necessarily be adjustable in the left-right direction.

The change mechanism 320 need not necessarily be provided with the insertion hole 322, the screw holes 333 and the screw members 334. The positioning member 310 need not necessarily directly come into contact with the movable body 304. For example, the change mechanism 320 may be provided with a specified insertion hole, a specified bolt and a specified nut. The specified insertion hole is provided in one of the movable body 304 and the positioning member 310 and is open in the left-right direction. The specified bolt is inserted through the specified insertion hole along the left-right direction and is fixed by the specified nut. When the specified bolt comes into contact with the other of the movable body 304 and the positioning member 310, the movable body 304 comes into contact with the positioning member 310 via the specified bolt, and the positioning member 310 positions the movable body 304 in the operating position. By loosening the specified bolt, the operator adjusts an insertion amount of the specified bolt with respect to the specified insertion hole. Therefore, the operator can adjust the contact position of the positioning member 310 and the movable body 304 in the left-right direction, and can adjust the operating position of the movable body 304 in the left-right direction.

The lower adjustment mechanism 520 need not necessarily be provided with the lower screw hole 517, the bolt 521 and the nut 522. For example, the lower adjustment mechanism 520 may be provided with a first insertion hole, a first fastening hole and a first fastening member. The first insertion hole is provided such that it penetrates the lower holding body 515 in the left-right direction, and is long in the up-down direction, which is the direction in which the lower elastic member 509 is elastically deformed. The first fastening hole is provided in the lower support body 502, is open leftward, and faces the first insertion hole from the right side. The first fastening member is inserted through the first insertion hole and is fastened into the first fastening hole. The operator can move the lower holding body 515 up and down, by loosening the first fastening member to an extent that inhibits the first fastening member from dropping out from the first fastening hole. Thus, the operator can adjust the elastic deformation amount of the lower elastic member 509.

The upper adjustment mechanism 620 may be provided with a single engagement hole, instead of being provided with the plurality of engagement holes 649. In this case, the upper adjustment mechanism 620 may be provided with a second insertion hole, a second fastening hole and a second fastening member, in addition to the upper coupling member 642, the engagement pin 647 and the engagement hole 649. The second insertion hole penetrates the upper coupling member 642 in the up-down direction and is long in the left-right direction, which is the direction in which the upper elastic member 609 is elastically deformed. The second fastening hole is provided in the fixed base 641 and faces the second insertion hole from below. The second fastening member is inserted through the second insertion hole and is fastened into the second fastening hole. The operator can move the upper coupling member 642 left and right, by loosening the second fastening member to an extent that inhibits the second fastening member from dropping out from the second fastening hole. Thus, the operator can adjust the elastic deformation amount of the upper elastic member 609.

## Claims

1. A bonding device (1) comprising:
a lower support portion (52, 230) configured to support a lower sheet (8) from below;
a nozzle (11, 13) provided above the lower sheet and including an upper support portion (11A) and a discharge port (11B, 13B), the upper support portion being configured to support, from below, an upper sheet (6) that is to be overlapped on the lower sheet from above, the discharge port being configured to discharge an adhesive (Z), below the upper support portion, toward the lower sheet;
a supply mechanism (45) configured to supply the adhesive to the nozzle;
a conveyance mechanism (80) configured to convey the lower sheet and the upper sheet on a downstream side in a conveyance direction with respect to the nozzle while clamping the lower sheet and the upper sheet in an up-down direction, the conveyance direction being a direction in which the lower sheet and the upper sheet are conveyed, the conveyance mechanism being configured to convey the lower sheet to which the adhesive has been applied;
a discharge-conveyance control portion (101) configured to discharge the adhesive from the discharge port and configured to pressure-bond and convey a lower specified end portion (8A) and an upper specified end portion (6A) while applying the adhesive to the lower specified end portion by performing drive control of the conveyance mechanism and the supply mechanism, the lower specified end portion being an end portion of the lower sheet on one side in a specified direction, the upper specified end portion being an end portion of the upper sheet on another side opposite to the one side, the specified direction being orthogonal to the conveyance direction and the up-down direction;
a lower clamp roller (501) protruding upward from the lower support portion on an upstream side with respect to the nozzle in the conveyance direction, the lower clamp roller being configured to come into contact with the lower sheet, the lower clamp roller being configured to rotate with an axial direction of the lower clamp roller being the conveyance direction;
a support member (315) extending in the specified direction and the conveyance direction, and configured to clamp the lower sheet between the support member and the lower clamp roller and to support the upper sheet from below;
an upper clamp roller (601) configured to rotate with an axial direction of the upper clamp roller being the conveyance direction, and configured to clamp, from above, the upper specified end portion between the upper clamp roller and the support member;
a lower motor (505) configured to drive the lower clamp roller;
an upper motor (605) configured to drive the upper clamp roller;
a lower detection portion (535) configured to detect whether the lower specified end portion is located at a lower detection position, the lower detection position being a predetermined position between the discharge port and the lower clamp roller in the conveyance direction;
an upper detection portion (635) configured to detect whether the upper specified end portion is located at an upper detection position, the upper detection position being a predetermined position between the discharge port and the upper clamp roller in the conveyance direction; and
a motor control portion (101) configured to control the lower motor and the upper motor when the discharge-conveyance control portion controls the conveyance mechanism and the supply mechanism,
wherein
the motor control portion includes
a first motor control portion (101) configured to move the lower sheet to the other side by rotationally driving the lower clamp roller in a first output direction when the lower detection portion detects that the lower specified end portion is located at the lower detection position,
a second motor control portion (101) configured to move the lower sheet to the one side by rotationally driving the lower clamp roller in a second output direction opposite to the first output direction when the lower detection portion detects that the lower specified end portion is not located at the lower detection position,
a third motor control portion (101) configured to move the upper sheet to the one side by rotationally riving the upper clamp roller in a third output direction when the upper detection portion detects that the upper specified end portion is located at the upper detection position, and
a fourth motor control portion (101) configured to move the upper sheet to the other side by rotationally driving the upper clamp roller in a fourth output direction opposite to the third output direction when the upper detection portion detects that the upper specified end portion is not located at the upper detection position.

2. The bonding device according to claim 1, wherein
the lower clamp roller is located further to the other side than the lower detection position, and
the upper clamp roller is located further to the one side than the upper detection position.

3. The bonding device according to claim 1 or 2, wherein
the support member includes an upper support surface (315A) configured to support the upper sheet, and
the upper support surface is located at a same height as an upper end of an upstream-side end portion, in the conveyance direction, of the upper support portion of the nozzle, wherein the support member may extends in parallel with the lower support portion.

4. The bonding device according to any one of claims 1 to 3, wherein
an upstream-side end portion, in the conveyance direction, of at least one of the lower clamp roller and the upper clamp roller is a roller end portion (499, 699), the roller end portion being formed in a inclined shape that extends toward a center side in a radial direction as the roller end portion extends toward the upstream side in the conveyance direction.

5. The bonding device according to any one of claims 1 to 4, wherein
the lower detection portion includes
a lower light emitting portion (535A) configured to emit light upward, and
a lower light receiving portion (535B) configured to receive the light emitted by the lower light emitting portion,
the lower support portion includes a nozzle facing member (230) that faces the nozzle from below,
the nozzle facing member includes a through hole (235) that is open in the up-down direction,
the lower light emitting portion is positioned below the through hole, and
the lower detection position is a position above the lower detection portion, and wherein the upper detection portion may include an upper light emitting portion (635A) configured to emit light downward, and an upper light receiving portion (635B) configured to receive the light emitted by the upper light emitting portion, and the support member may include a lower reflection portion (315F) configured to reflect the light toward the lower light receiving portion, the light being emitted by the lower light emitting portion, and an upper reflection portion (315E) configured to reflect the light toward the upper light receiving portion, the light being emitted by the upper light emitting portion, the lower detection position being a position between the lower light emitting portion and the lower reflection portion, and the upper detection position being a position between the upper light emitting portion and the upper reflection portion.

6. The bonding device according to claim 5, further comprising:
a nozzle mounting portion (10) on which a plurality of the nozzles are selectively mounted, discharge widths of the plurality of the nozzles being different from each other, each of the discharge widths being a formation range of the discharge port in the specified direction; and
an upper detection portion support mechanism (660) configured to support the upper detection portion such that the upper detection portion is able to move in the specified direction,
wherein
the upper reflection portion is configured to move in the specified direction in accordance with a position of the upper detection portion in the specified direction.

7. The bonding device according to claim 6, wherein
the upper detection portion support mechanism includes
an upper fixing member (632) fixed at a predetermined position,
a holding member (633) configured to hold the upper detection portion,
a long hole (638) that is provided in the holding member and that is long in the specified direction,
a fastening hole (639) that is provided in the upper fixing member and that faces the long hole, and
a fastening member (637) that is inserted through the long hole and that is fastened into the fastening hole.

8. The bonding device according to claim 6 or 7, further comprising:
a nozzle support member (26) configured to support the nozzle such that the nozzle is able to move between a facing position and a separated position, the facing position being a position in which the discharge port faces the nozzle facing member from above, the separated position being a position in which the discharge port is located on the upstream side with respect to the support member in the conveyance direction;
a nozzle motor (113) configured to move the nozzle between the facing position and the separated position;
a movable body (304) configured to support the support member;
a base (33) configured to support the movable body such that the movable body is able to move between an operating position and a retracted position, the operating position being a position in which the support member is located at a position on the upstream side in the conveyance direction with respect to the nozzle in the facing position, and the retracted position being a position in which the support member is located at a position displaced to the one side in the specified direction with respect to the operating position;
a drive portion (309) provided on the base and configured to move the movable body;
a nozzle movement control portion (101) configured to move the nozzle from the separated position to the facing position by controlling the nozzle motor, before the discharge-conveyance control portion controls the conveyance mechanism and the supply mechanism; and
a movable body movement control portion (101) configured to move the movable body from the retracted position to the operating position by controlling the drive portion, after the nozzle movement control portion has moved the nozzle and before the discharge-conveyance control portion controls the conveyance mechanism and the supply mechanism.

9. The bonding device according to claim 8, further comprising:
a positioning member (310) provided on the base, the positioning member being configured to position the movable body in the operating position by restricting the movable body from moving further to an opposite side with respect to the retracted position than the operating position; and
a change mechanism (320) configured to change the position at which the positioning member positions the movable body, the change mechanism being configured to change the position in a movement direction of the movable body, wherein
the change mechanism may include an insertion hole (322) that is provided in the positioning member and that is long in the specified direction, a screw hole (333) that is provided on the base and that faces the insertion hole, and a screw member (334) that is inserted through the insertion hole and that is fastened into the screw hole.

10. The bonding device according to any one of claims 1 to 9, further comprising:
a lower motor support member (504) configured to support the lower motor below the lower support portion;
a lower support body (502) configured to rotatably support the lower motor support member around a lower axis line that extends in the conveyance direction;
a lower arm (507) extending upward and to the one side from the lower motor support member, and including a leading end portion (507A) configured to rotatably support the lower clamp roller;
a lower drive coupling portion (510) configured to couple the lower motor and the lower clamp roller; and
a lower elastic member (509) configured to couple to the lower motor support member and the lower support body, and to urge the lower motor support member in a rotating direction in which the lower clamp roller protrudes upward from the lower support portion, wherein the bonding device may further comprise a lower adjustment mechanism (520) configured to adjust an elastic deformation amount of the lower elastic member, and
wherein the lower adjustment mechanism may include a lower coupling member (515) configured to couple the lower support body and the lower elastic member, a lower screw hole (517) provided in the lower coupling member, a bolt (521) screwed into the lower screw hole, and a nut (522) into which the bolt is inserted, the nut being fixed to the lower coupling member.

11. The bonding device according to claim 9 or 10, wherein
the lower motor support member is configured to rotate between a lower contact position and a lower separated position, the lower contact position being a position in which the lower clamp roller is in contact with the support member, the lower separated position being a position in which the lower clamp roller is separated downward from the support member, and
the bonding device may further comprise a lower move portion (525) including a lower rod (526), the lower rod being configured to move along an axial direction of the lower rod, the lower move portion being configured to move the lower rod between a lower urging position and a lower retracted position, the lower urging position being a position in which the lower rod urges the lower motor support member in a rotating direction from the lower contact position toward the lower separated position, the lower retracted position being a position in which the lower rod is separated from the lower motor support member; a first lower control portion (101) configured to move the lower rod from the lower retracted position to the lower urging position by controlling the lower move portion, before the discharge-conveyance control portion controls the conveyance mechanism and the supply mechanism; and a second lower control portion (101) configured to move the lower rod from the lower urging position to the lower retracted position by controlling the lower move portion after the first lower control portion has moved the lower rod and before the discharge-conveyance control portion controls the conveyance mechanism and the supply mechanism.

12. The bonding device according to any one of claims 1 to 11, further comprising:
an upper motor support member (604) configured to support the upper motor above the lower support portion;
an upper support body (602) configured to rotatably support the upper motor support member around an upper axis line that extends in the conveyance direction;
an upper arm (607) extending downward and to the other side from the upper motor support member, and including a leading end portion (607A) configured to rotatably support the upper clamp roller;
an upper drive coupling portion (610) configured to couple the upper motor and the upper clamp roller; and
an upper elastic member (609) configured to couple the upper motor support member and the upper support body, and to urge the upper motor support member in a rotating direction in which the upper clamp roller separates upward from the support member, wherein the bonding device may further comprise an upper adjustment mechanism (620) configured to adjust an elastic deformation amount of the upper elastic member, and wherein the upper adjustment mechanism may include an upper coupling member (641) configured to be coupled to the upper support body, a plurality of engagement holes (649) that are provided in the upper coupling member and that are aligned along a direction in which the upper elastic member is elastically deformed, and an engagement portion (647) configured to be coupled to the upper elastic member and to be engaged with one of the plurality of engagement holes.

13. The bonding device according to claim 12, wherein
the upper motor support member is configured to rotate between an upper contact position and an upper separated position, the upper contact position being a position in which the upper clamp roller is in contact with the support member, the upper separated position being a position in which the upper clamp roller is separated upward from the support member.

14. The bonding device according to claim 13, further comprising:
an upper move portion (625) including an upper rod (626) configured to move along an axial direction of the upper rod, the upper move portion being configured to move the upper rod between an upper urging position and an upper retracted position, the upper urging position being a position in which the upper rod urges the upper motor support member in a rotating direction from the upper contact position toward the upper separated position, the upper retracted position being a position in which the upper rod is separated from the upper motor support member;
a first upper move control portion (101) configured to move the upper rod from the upper retracted position to the upper urging position by controlling the upper move portion, before the discharge-conveyance control portion controls the conveyance mechanism and the supply mechanism; and
a second upper move control portion (101) configured to move the upper rod from the upper urging position to the upper retracted position by controlling the upper move portion, after the first upper control portion has moved the upper rod and before the discharge-conveyance control portion controls the conveyance mechanism and the supply mechanism.

15. The bonding device according to any one of claims 1 to 14, wherein
the conveyance mechanism includes
a lower conveyance roller (270) configured to come into contact with the lower sheet from below, and configured to rotate on the downstream side in the conveyance direction with respect to the nozzle, the lower conveyance roller being configured to rotate with an axial direction of the lower conveyance roller being the specified direction,
an upper conveyance roller (12) configured to rotate with an axial direction of the upper conveyance roller being the specified direction, and configured to clamp, from above, the lower sheet and the upper sheet between the upper conveyance roller and the lower conveyance roller,
a lower conveyance motor (262) configured to drive the lower conveyance roller, and
an upper conveyance motor (112) configured to drive the upper conveyance roller,
the lower support portion includes a hole portion (232) that is open in the up-down direction below the discharge port, and
the conveyance mechanism includes an under-nozzle roller (275) configured to come into contact with the lower sheet from below and configured to rotate with an axial direction of the under-nozzle roller being the specified direction, the under-nozzle roller being configured to rotate on the upstream side in the conveyance direction with respect to the lower conveyance roller, the under-nozzle roller being coupled to the lower conveyance motor, the under-nozzle roller protruding upward from the hole portion and facing the discharge port, and an outer diameter of the under-nozzle roller being the same as the outer diameter of the lower conveyance roller.
